# EUROPEAN PATENT APPLICATION

(11) **EP 4 672 428 A2**
(43) Date of publication of application: **31.12.2025**
(21) Application number: 25184603.6
(22) Date of filing: 23.06.2025
(51) Int. Cl.: H01M 10/613, H01M 10/6563, H01M 50/284

(54) **ENERGY STORAGE DEVICE AND ENERGY STORAGE SYSTEM**

(30) Priority: 24.06.2024 CN 202421463271 U
(71) Applicant: Shenzhen Hithium Hero Energy Equity Technology Co., Ltd, Shenzhen, Guangdong 518110 (CN); Xiamen Hithium Energy Storage Technology Co., Ltd., Xiamen, Fujian 361100 (CN)
(72) Inventor: LI, Wanzhen, Shenzhen, 518110 (CN); LIN, Xiaoping, Shenzhen, 518110 (CN); GU, Tianhao, Shenzhen, 518110 (CN)
(74) Representative: RGTH

(57) **Abstract**

The energy storage device includes a housing assembly and a battery. The housing assembly includes a top shell, an intermediate shell and a bottom shell. The intermediate shell is located between the top shell and the bottom shell, and is respectively connected to the top shell and the bottom shell. An air inlet space is formed between the intermediate shell and the top shell, and an air outlet space is formed between the intermediate shell and the bottom shell. The top shell is provided with an air inlet connected to the air inlet space, the intermediate shell is provided with an air supply port connected to the air inlet space and the air outlet space, the bottom shell is provided with an air outlet connected to the air outlet space, and the battery is built in the air outlet space. The air supply port is provided with a fan assembly.

## Description

### TECHNICAL FIELD

The present disclosure relates to the technical field of energy storage, and in particular to an energy storage device and an energy storage system.

### BACKGROUND

The portable energy storage system in the related art will generate a large amount of heat during the charging and discharging process, and will cause the internal temperature of the portable energy storage system to rise. If the heat inside the portable energy storage system cannot be discharged in time, the battery may be in an environment with inappropriate temperature, resulting in unstable battery performance, and even causing serious consequences such as thermal runaway of the battery and even fire and explosion, affecting the service life and safety of the battery.

### SUMMARY

The one or more embodiments of the present disclosure disclose an energy storage device and an energy storage system, which can achieve efficient heat dissipation effect, keep the temperature of the battery from being too high, thereby ensuring a stable operating state of the battery and improving the reliability and stability of its operation.

In order to achieve the above objects, according to a first aspect, the present disclosure provides an energy storage device, including:
a housing assembly, including a top shell, an intermediate shell and a bottom shell, where the intermediate shell is located between the top shell and the bottom shell, the intermediate shell is connected to the top shell and the bottom shell respectively, an air inlet space is formed between the intermediate shell and the top shell, an air outlet space is formed between the intermediate shell and the bottom shell, the top shell is provided with an air inlet connected to the air inlet space, the intermediate shell is provided with an air supply port connected to the air inlet space and the air outlet space, and the bottom shell is provided with an air outlet connected to the air outlet space; and
a battery, built in the air outlet space;
where the air supply port is installed with a fan assembly, the fan assembly is configured to draw outside air into the air inlet space through the air inlet, and the fan assembly is further configured to blow the outside air in the air inlet space toward the battery, and discharge the outside air to the outside of the air outlet space through the air outlet.

In the energy storage device provided in this embodiment, the housing assembly includes a top shell, an intermediate shell, and a bottom shell, where the top shell is provided with an air inlet and the bottom shell is provided with an air outlet, the intermediate shell is connected between the top shell and the bottom shell, and there is an air inlet space formed between the intermediate shell and the top shell and an air outlet space formed between the intermediate shell and the bottom shell, and the intermediate shell is provided with an air supply port connecting the air inlet space and the air outlet space, with the battery is provided in the air outlet space, and the fan assembly is provided in the air supply port of the intermediate housing, so that the upper space (i.e., the air inlet space) of the intermediate shell can be used as the inlet flow field of the fan assembly, and the lower space (i.e., the air outlet space) of the intermediate shell can be used as the outlet flow field of the fan assembly. That is, when the fan assembly operates, the outside air enters into the air inlet space through the air inlet, and then is blown towards the battery under the action of the fan assembly to take away the heat of the battery, and is finally discharged to the outside of the air outlet space through the air outlet. In this process, the air in the air outlet space and the air in the air outlet space are relatively closed, i.e., the inlet and outlet flow fields of the fan assembly are in the state of being completely isolated, and the air of the air outlet space will not cross-flow to the air outlet space, thus guaranteeing that the initial air temperature entering the air outlet space will not be affected by the internal circulating air temperature, and instead, it will be able to be in close proximity to the ambient temperature, that is, ensure that the temperature of the air in contact with the battery can be close to the ambient temperature, thereby realizing the effective heat dissipation of the battery, and keeping the temperature of the battery from being too high, which ensures the stable working state of the battery, and improves reliability and stability of the battery operation.

As a possible embodiment, in an embodiment according to a first aspect of the present disclosure, the top shell is provided with a power plug, and the power plug is electrically connected to the battery through a wire harness; and where the intermediate shell is further provided with a wire hole connected to the air inlet space and the air outlet space, the wire harness is passed through the wire hole, and a sealing ring is provided between the wire harness and the wire hole.

The power plug is provided in the top shell, so that the power plug can be provided close to the grip and the distance between the grip and the power plug can be set very close. Compared to the power plug provided in the bottom shell, since the power plug and the grip are both located in the top shell, the distance between the two is closer, and when plugging and unplugging the power cord, it is easier to apply force to pull the power cord out of the power plug, or insert the power cord into the power plug. At the same time, a sealing ring is provided between the wire harness and the wire hole, and the sealing ring can be configured to seal the gap between the wire harness and the wire hole, so as to avoid the air in the air outlet space from cross-flowing into the air inlet space through the wire hole, so as to ensure that the initial air temperature entering the air outlet space will not be affected by the internal circulating air temperature, and can be close to the ambient temperature, which also ensures that the temperature of the air in contact with the battery will be close to the ambient temperature, thus realizing effective heat dissipation of the battery, and keeping the temperature of the battery from being too high, which ensures the stable working condition of the battery and improves reliability and stability of the battery operation.

As a possible embodiment, in an embodiment according to a first aspect of the present disclosure, an air inlet area of the air inlet is S1, an air outlet area of the air outlet is S2, S1<S2, and/or, S1/S2 ranges from 0.8 to 0.9. By making the air inlet area S1 of the air inlet slightly smaller than the air outlet area S2 of the air outlet, for example, the ratio of the air inlet area S1 of the air inlet to the air outlet area S2 of the air outlet ranges from 0.8 to 0.9, the air inlet area S1 of the air inlet is close to the air outlet area S2 of the air outlet, that is, the area of the air inlet and the air outlet area of the air outlet, so as to avoid the area of the air inlet being much smaller than the air outlet area of the air outlet. Thus, the air inlet area of the air inlet is appropriately increased, which can ensure the rate at which the air in the air outlet space is discharged to the outside of the air outlet space through the air outlet, to avoid the heated air lingering around the battery, while increasing the air inlet rate, which is beneficial to improve the heat dissipation effect and ensure the service life and safety of the battery.

As a possible embodiment, in an embodiment according to a first aspect of the present disclosure, the air inlet and the air outlet are located on a same side of the housing assembly, or the air inlet and the air outlet are located on two opposite sides of the housing assembly, or in a case where there is one air inlet and at least two air outlets, at least one air outlet and the air inlet are located on a same side of the housing assembly, and at least another air outlet is located on an opposite side of the air inlet. In c case where the conditions and space meet the requirements, it is preferred to provide the air outlet on the opposite side of the air inlet to ensure that the temperature of the outside air passing through the air inlet is close to the ambient temperature, thereby ensuring that the temperature of the air in contact with the battery is close to the ambient temperature, so as to achieve effective heat dissipation of the battery, and ensure the service life and safety of the battery.

As a possible embodiment, in an embodiment according to a first aspect of the present disclosure, in a case where the air inlet and the air outlet are located on the same side of the housing assembly: the air outlet is located at bottom of the bottom shell away from the top shell, and/or, along a height direction from the bottom shell to the top shell, a distance between the air outlet and a bottom surface of the bottom shell is d1, and a distance between the air inlet and the bottom surface of the bottom shell is d2, d1/d2 ranges from 2/25 to 7/25. Through the above design, compared with providing the air outlet at a position of the bottom shell close to the top shell, the distance between the air inlet and the air outlet can be farther, so as to avoid the situation where the hot air discharged through the air outlet rises to the air inlet and re-enters the air inlet, thereby ensuring that the temperature of the outside air passing through the air inlet can be close to the ambient temperature, so as to ensure that the temperature of the air in contact with the battery can be close to the ambient temperature, and then achieve the effective heat dissipation of the battery, and ensure the service life and safety of the battery.

As a possible embodiment, in an embodiment according to a first aspect of the present disclosure, the energy storage device further includes a main circuit board provided in the air outlet space, the main circuit board is located on one side of the battery in its width direction, and the main circuit board is electrically connected to the battery, the main circuit board has a heat concentration area, and the air outlet is provided adjacent to the heat concentration area. When holding the grip to lift the energy storage device, since the main circuit board is located on one side of the battery and the weight of the battery is much heavier than the main circuit board, there is a large difference in weight between the two sides. Therefore, when the energy storage device is carried while walking, it will not rub against the user's legs, thereby avoiding affecting walking. At the same time, the air outlet is provided near the heat concentration area, so that the heat of the heat concentration area of the main circuit board can quickly reach the outside of the bottom shell through the air outlet, thereby accelerating the heat dissipation of the heat concentration area of the main circuit board, accelerating the heat dissipation rate of the main circuit board, reducing the temperature of the main circuit board, and increasing the service life of the main circuit board. The heat concentration area of the main circuit board is mainly the area where high-heat generating devices such as bidirectional buck-boost converters, bidirectional isolators, and AC-DC converters are concentrated.

As a possible embodiment, in an embodiment according to a first aspect of the present disclosure, the energy storage device further includes a main circuit board provided in the air outlet space, the main circuit board is located on one side of the battery in its width direction, and the main circuit board is electrically connected to the battery, the main circuit board is provided with electronic components, and the electronic components include a functional component with a temperature higher than or equal to 110°C in an operating state; and the energy storage device further includes heat dissipation fins, the heat dissipation fins are provided on a side of the functional component away from the battery, and the heat dissipation fins extend along an axial direction of the fan assembly.

According to the present disclosure, the heat dissipation fins are provided on the side of the functional device away from the battery. That is, a heat dissipation component is locally added to the area with high temperature of the main circuit board, which can quickly dissipate heat and cool down the functional device with a relatively high temperature in the running state, avoid safety accidents, and improve the safety of use; at the same time, the heat dissipation fins are also provided to extend along the axial direction of the fan assembly, so that the extending direction of the heat dissipation fins can be kept consistent with the wind direction as much as possible. Thus, the heat dissipation fins can be configured to effectively guide the gas flowing through the functional device (that is, the gas blown out of the fan assembly), so that the gas can fully exchange heat with the functional device, improve the heat dissipation effect of the functional device, and have a better heat dissipation effect.

As a possible embodiment, in an embodiment according to a first aspect of the present disclosure, the air outlet is provided adjacent to the functional component. In this way, the gas that exchanges heat with the functional device can be quickly discharged from the bottom shell, avoiding the situation where the gas stays around the functional device for a long time so that it is difficult for the functional device to quickly cool down in a short time, which is conducive to improving the heat dissipation effect of the fan assembly on the functional device.

As a possible embodiment, in an embodiment according to a first aspect of the present disclosure, the energy storage device further includes a mainboard mounting member and a main circuit board provided in the air outlet space, the mainboard mounting member is connected to the battery, and the mainboard mounting member is located on one side of the battery along its width direction, the main circuit board is installed on the mainboard mounting member, and there is a spacing between the main circuit board and the battery, and the main circuit board is connected to the battery. By providing the mainboard mounting member to provide a gap between the main circuit board and the battery, an expansion space can be provided for the battery, so as to avoid squeezing the main circuit board when the battery expands, thereby protecting the main circuit board.

Therefore, in the design of the present disclosure, in order to prevent the battery from squeezing the main circuit board when it expands, not only the first clamping member and the second clamping member are provided to clamp the battery to reduce the expansion degree of the battery, or prevent the battery from expanding, thereby preventing the battery from squeezing the main circuit board when it expands; a mainboard mounting member is further provided to mount the main circuit board on the first clamping member through the mainboard mounting member. The main circuit board is mounted and supported by the mainboard mounting member, so that there can be a gap between the main circuit board and the first clamping member, providing expansion space for the battery, so as to better prevent the battery from squeezing the main circuit board when it expands, and provide better and more effective protection for the main circuit board.

As a possible embodiment, in an embodiment according to a first aspect of the present disclosure, the mainboard mounting member is a shell structure with a cavity, the main circuit board is installed in the cavity of the mainboard mounting member, the mainboard mounting member is provided with a heat dissipation through hole and a vent connected to the cavity, the vent is on a top surface of the mainboard mounting member close to the fan assembly, the heat dissipation through hole includes a top heat dissipation hole and a bottom heat dissipation hole, the top heat dissipation hole is provided adjacent to the vent, and the bottom heat dissipation hole is located at bottom of the mainboard mounting member away from the fan assembly, and/or the heat dissipation through hole includes a first side heat dissipation hole and a second side heat dissipation hole, the first side heat dissipation hole and the air outlet are located on a same side of the housing assembly, and the second side heat dissipation hole is located on an opposite side of the air outlet.

Through the above design, the mainboard mounting member has a plurality of heat dissipation holes, so that when the fan is started to dissipate heat for the electronic component, the gas can flow out from multiple directions to the outside of the mainboard mounting member, which can increase the gas circulation rate and improve the heat dissipation effect. At the same time, since the second side heat dissipation hole is located on the opposite side of the air outlet, and the bottom heat dissipation hole is closer to the air outlet than the second side heat dissipation hole, the local fluid flowing out of the second side heat dissipation hole flows into the bottom heat dissipation hole after heat exchange with the bottom shell, and then flows out from the air outlet, thereby further reducing the fluid temperature of the bottom heat dissipation hole, so that the temperature of the electronic components on the main circuit board can be further reduced, and the heat dissipation effect is better.

As a possible embodiment, in an embodiment according to a first aspect of the present disclosure, the top shell is provided with a power plug, the intermediate shell is further provided with a wire hole connected to the air inlet space and the air outlet space, the energy storage device further includes a wire harness, the wire harness passes through the wire hole, and one end of the wire harness is electrically connected to the power plug, and the other end of the wire harness passes through the bottom heat dissipation hole and the second side heat dissipation hole into the cavity of the mainboard mounting member to be electrically connected to the battery; in a length direction of the energy storage device, a length of the mainboard mounting member is L0, a length of the bottom heat dissipation hole is L1, and a length of the second side heat dissipation hole is L2, in a height direction of the energy storage device, a width of the mainboard mounting member is D0, a width of the bottom heat dissipation hole is D1, and a width of the second side heat dissipation hole is D2, wherein L1/L0 ranges from 0.85 to 0.95, L2/L0 ranges from 0.20 to 0.30, D1/D0 ranges from 0.20 to 0.30, D2/D0 ranges from 0.45 to 0.60.

When the bottom heat dissipation hole and the second side heat dissipation hole meet the above-mentioned size relationship, the bottom heat dissipation hole and the second side heat dissipation hole can have a larger diameter, so as to avoid the mainboard mounting member from blocking the operator's hands when the other end of the wire harness is plugged into the main circuit board from the bottom heat dissipation hole and the second side heat dissipation hole, so as to facilitate the plugging of the wire harness.

As a possible embodiment, in an embodiment according to a first aspect of the present disclosure, the energy storage device further includes a main circuit board and a heat insulation board provided in the air outlet space, the main circuit board is located on one side of the battery in its width direction, and the main circuit board is electrically connected to the battery, and the heat insulation board is provided between the main circuit board and the battery. Thus, a heat insulation effect can be achieved, so as to reduce or prevent the heat generated by the battery during thermal runaway from spreading to the main circuit board, thereby preventing the fire from spreading to the main circuit board when the battery catches fire; or, the heat insulation board is configured to weaken the heat transferred from the main circuit board to the battery, so as to prevent the battery from being overheated and causing thermal runaway or even fire and explosion, thereby ensuring the service life and safety of the battery.

As a possible embodiment, in an embodiment according to a first aspect of the present disclosure, the energy storage device further includes a clamping assembly provided in the air outlet space, the clamping assembly is connected to the intermediate shell, and the clamping assembly forms a clamping space, the battery is built in the clamping space, and the heat insulation board is located between the main circuit board and the clamping assembly; a material of the clamping assembly is metal, the heat insulation board is provided with an avoidance gap, the avoidance gap is provided with a thermal conductive adhesive, and the thermal conductive adhesive is bonded between the main circuit board and the clamping assembly.

Through the above design, on the basis of weakening the heat transfer between the main circuit board and the battery, the clamping assembly can be configured to clamp the battery to reduce the expanding degree of the battery, and the thermal conductive adhesive can also be configured to conduct the heat of the main circuit board to the clamping assembly of the metal material, so as to diffuse the heat and achieve a better heat dissipation effect.

As a possible embodiment, in an embodiment according to a first aspect of the present disclosure, the energy storage device further includes a first clamping member and a second clamping member provided in the air outlet space, the first clamping member and the second clamping member are respectively connected to the intermediate shell, and the first clamping member and the second clamping member are connected, a clamping space is formed between the first clamping member and the second clamping member, and the battery is built in the clamping space.

On the basis of designing the housing assembly as a housing structure including the top shell, the intermediate shell and the bottom shell, a first clamping member and a second clamping member are additionally provided for clamping the battery. In this way, the battery can be clamped by the first clamping member and the second clamping member to reduce the expansion degree of the battery, and the battery can be connected to the intermediate shell through the first clamping member and the second clamping member. Compared with the mode in which the housing includes the top shell and the bottom shell, an additional intermediate shell connected to the top shell is added, and the components such as the first clamping member, the second clamping member and the bottom shell are made to respectively connect to the intermediate shell, so that the intermediate shell can bear part of the force of the top shell, that is, the intermediate shell can share part of the force from the first clamping member, the second clamping member, the battery, the bottom shell and other components, so as to avoid all the weight being applied to the top shell and cause damage to the top shell, increase the structural strength of the top shell 101, and further improve the bearing capability of the top shell when lifting the energy storage device, improve the service life of the top shell, and improve the service life of the housing assembly.

As a possible embodiment, in an embodiment according to a first aspect of the present disclosure, the energy storage device further includes a main circuit board provided in the air outlet space, the main circuit board is located on one side of the battery in its width direction, and the main circuit board is electrically connected to the battery through a connecting bar; where the connecting bar includes a first connecting part, an elastic deformation part, and a second connecting part connected in sequence, the first connecting part is electrically connected to a pole of the battery, and the second connecting part is electrically connected to the main circuit board.

During transportation, there may be a relative movement between the battery and the main circuit board, which might be inevitable. At the same time, since the connecting bar is connected between the battery and the main circuit board, when there is a relative movement between the battery and the main circuit board, the connecting bar will be pulled by the battery and the main circuit board. The connecting bar includes an elastic deformation part. When the connecting bar is pulled by the battery and the main circuit board, it can deform adaptively, better absorb energy and impact, and prevent damage to the welding position of the first connecting part and the battery, so as to make the welding position of the second connecting part and the main circuit board, thereby avoiding the situation of circuit breaking.

As a possible embodiment, in an embodiment according to a first aspect of the present disclosure, an abutment protrusion is convexly provided on an outer peripheral surface of the intermediate shell, and the abutment protrusion is provided around a peripheral direction of the intermediate shell, where one end of the intermediate shell is embedded in the bottom shell, the abutment protrusion is located outside the bottom shell, and the abutment protrusion has a first abutment surface provided toward a bottom surface of the bottom shell, and the first abutment surface abuts against an end surface of the bottom shell; and one of the first abutment surface and the end surface of the bottom shell is provided with a groove, and the other of the first abutment surface and the end surface of the bottom shell is provided with a protrusion, and the protrusion is embedded in the groove.

Usually, when the energy storage device is placed on a placement plane (such as the ground, a desktop, a countertop, etc.), the energy storage device is placed upright on the placement plane. That is, the bottom surface of the bottom shell is in contact with the placement plane, so the liquid on the housing assembly generally flows from top to bottom. For example, on a rainy day, when rain falls down and drips onto the top shell, the rainwater on the top shell usually flows from top to bottom under the action of gravity. Even if the rainwater flows into the gap between the first abutment surface and the end surface of the bottom shell, in a case where the first abutment surface is provided with a groove, and the end surface of the bottom shell is provided with a protrusion embedded in the groove, since the protrusion is embedded in the groove, which is equivalent to forming an upward barrier, the rainwater cannot go up along the protrusion under the action of gravity, thereby preventing rainwater from entering the interior of the housing assembly to achieve a waterproof design. In a case where the end surface of the bottom shell is provided with a groove, and the first abutment surface is provided with a protrusion embedded in the groove, even if rainwater flows into the gap between the first abutment surface and the end surface of the bottom shell, the rainwater will flow into the groove under the action of gravity, so that the rainwater is temporarily stored in the groove, thereby preventing the rainwater from entering the interior of the housing assembly, so as to achieve a waterproof design.

As a possible embodiment, in an embodiment according to a first aspect of the present disclosure, when the first abutment surface is provided with the groove, and the end surface of the bottom shell is provided with the protrusion, the protrusion has an inclined outer side surface, the inclined outer side surface is connected to the end surface of the bottom shell at an obtuse angle, and the groove has an inclined groove wall surface that fits the inclined outer side surface. In this way, on the one hand, the climbing slope of the external liquid can be increased, and the difficulty of the external liquid passing over the protrusion and entering the interior of the housing assembly can be increased, thereby further improving the waterproof performance of the housing assembly; on the other hand, during assembly, the cooperation of the inclined outer side surface and the inclined groove wall surface can be used to guide the protrusion to be inserted into the groove, which facilitates the assembly between the intermediate shell and the bottom shell.

As a possible embodiment, in an embodiment according to a first aspect of the present disclosure, the other end of the intermediate shell is embedded in the top shell, the abutment protrusion is located between the top shell and the bottom shell, an outer peripheral surface of the abutment protrusion is lower than an outer peripheral surface of the top shell, and an outer peripheral surface of the abutment protrusion is lower than an outer peripheral surface of the bottom shell in a protruding direction of the abutment protrusion relative to the outer peripheral surface of the intermediate shell, and a connection between the outer peripheral surface of the bottom shell and the end surface of the bottom shell is provided with a chamfer.

When the energy storage device of the present disclosure is placed outdoors and encounters rain, rainwater will flow from the outer peripheral surface of the top shell toward the bottom shell. When the rainwater flows to the edge of the top shell, since the outer peripheral surface of the intermediate shell is lower than the outer peripheral surface of the top shell, and the outer peripheral surface of the abutment protrusion is lower than the outer peripheral surface of the bottom shell, the rainwater passes over the abutment protrusion under the action of its gravity, and directly drips onto the outer peripheral surface of the bottom shell and continues to flow downward along the outer peripheral surface of the bottom shell. Or, even if the rainwater drips on the end surface of the bottom shell, due to the existence of the protrusion and the groove, the rainwater will not penetrate into the interior of the housing assembly from the connection between the top shell and the intermediate shell and the connection between the bottom shell and the intermediate shell. Moreover, the existence of the bevel chamfer or the round chamfer can guide the rainwater dripping on the end surface of the bottom shell to the outer peripheral surface of the bottom shell, so that the rainwater continues to flow downward along the outer peripheral surface of the bottom shell, which can further improve the waterproof performance of the housing assembly.

As a possible embodiment, in an embodiment according to a first aspect of the present disclosure, a shape of the intermediate shell is rectangular, one end of the intermediate shell is embedded in the bottom shell, and one end of the intermediate shell is convexly provided with a plurality of spaced latch blocks, and the plurality of latch blocks are arranged along a peripheral direction of the intermediate shell on the outer peripheral surface of the intermediate shell, and an inner side wall of the bottom shell is convexly provided with a plurality of protruding blocks, and the plurality of protruding blocks are arranged along a peripheral direction of the bottom shell, and each of the protruding blocks is provided with a plug-in groove, and one latch block is embedded in one plug-in groove.

As a possible embodiment, in an embodiment according to a first aspect of the present disclosure, the energy storage device further includes a buffer, and the buffer is wrapped around an outer peripheral surface and a bottom surface of the battery. Thus, the buffer can be used to have a certain buffering effect on the battery, avoiding hard contact between the battery and the bottom shell or hard contact between the battery and the clamping assembly, thereby reducing the risk of damage to the battery caused by the bottom shell or the clamping assembly directly acting on the battery, thereby protecting the battery.

According to a second aspect, the present disclosure provides an energy storage system, including the energy storage device according to the above first aspect. It can be understood that the energy storage system having the energy storage device described in the first aspect also has all the beneficial effects of the energy storage device described in the first aspect. That is, the energy storage system having the energy storage device described in the first aspect can also achieve efficient heat dissipation effect, keep the temperature of the battery from being too high, thereby ensuring the stable working state of the battery and improving its working reliability and stability.

Compared with the prior art, the beneficial effects of the present disclosure are as follows:

In the energy storage device and energy storage system provided by the embodiments of the present disclosure, the housing assembly includes a top shell, an intermediate shell and a bottom shell. The top shell is provided with an air inlet, the bottom shell is provided with an air outlet, and the intermediate shell is connected between the top shell and the bottom shell. An air inlet space is formed between the intermediate shell and the top shell, and an air outlet space is formed between the intermediate shell and the bottom shell. The intermediate shell is also provided with an air supply port connecting the air inlet space and the air outlet space. The battery is provided in the air outlet space, and the fan assembly is provided in the air supply port of the intermediate shell, so that the upper space of the intermediate shell (i.e., the air inlet space) can be used as the air inlet flow domain of the fan assembly, and the lower space of the intermediate shell (i.e., the air outlet space) can be used as the air outlet flow domain of the fan assembly. That is, when the fan assembly is working, the outside air enters the air inlet space through the air inlet, and then blows toward the battery under the action of the fan assembly to take away the heat of the battery, and finally is discharged from the air outlet to the outside of the air outlet space. In this process, the path of the outside air is: air inlet → air inlet space → fan assembly → air outlet space → air outlet. Under the action of the fan assembly, the air in the air outlet space will not return to the air inlet space from the air supply port, so that the air in the air inlet space and the air outlet space can be relatively closed, that is, the inlet and outlet flow fields of the fan assembly are in a completely isolated state, and the air in the air outlet space will not flow into the air inlet space, so as to ensure that the initial wind temperature entering the air outlet space will not be affected by the internal circulating wind temperature, but can be close to the ambient temperature. That is, it can ensure that the temperature of the air in contact with the battery can be close to the ambient temperature, so as to achieve effective heat dissipation of the battery, keep the battery temperature from being too high, thereby ensuring the stable working state of the battery and improving its working reliability and stability.

### BRIEF DESCRIPTION OF THE DRAWINGS

In order to more clearly illustrate the technical solutions in the embodiments of the present disclosure, the following will briefly introduce the drawings required for use in the embodiments. Obviously, the drawings described below are only some embodiments of the present disclosure. For those skilled in the art, other drawings can be obtained based on these drawings without creative work.
FIG. 1 is a schematic diagram of a first structure of an energy storage device disclosed in the embodiment of the present disclosure;
FIG. 2 is a schematic diagram of a second structure of an energy storage device disclosed in the embodiment of the present disclosure;
FIG. 3 is a schematic diagram of the structure of the energy storage device in FIG. 2 from another perspective;
FIG. 4 is a cross-sectional view of the energy storage device in FIG. 2 along the A-A direction;
FIG. 5A is a schematic diagram of the decomposed structure of the energy storage device in FIG. 2;
FIG. 5B is a schematic diagram of the decomposed structure of the energy storage device in FIG. 2 from another perspective;
FIG. 6 is a side view of the energy storage device in FIG. 2;
FIG. 7 is a schematic diagram of a first decomposed structure of a battery, a first clamping member, a second clamping member, a main circuit board, a main board mounting member and a heat insulation board disclosed in the embodiment of the present disclosure;
FIG. 8 is a schematic diagram of a decomposed structure of another corner of FIG. 7;
FIG. 9 is a schematic diagram of a second decomposed structure of a battery, a first clamping member, a second clamping member, a main circuit board, a main board mounting member and a heat insulation board disclosed in the embodiment of the present disclosure;
FIG. 10 is a schematic diagram of a decomposed structure of a mainboard mounting member disclosed in the embodiment of the present disclosure;
FIG. 11 is a schematic diagram of a decomposed structure of a connecting bar disclosed in the embodiment of the present disclosure;
FIG. 12 is a schematic diagram of a structure of a shell assembly disclosed in the embodiment of the present disclosure;
FIG. 13 is a partial enlarged view of M in FIG. 12;
FIG. 14 is a simplified cross-sectional view of the shell assembly in FIG. 12 along the B-B direction;
FIG. 15 is a partial enlarged view of N in FIG. 14;
FIG. 16 is a schematic diagram of a structure of an intermediate shell disclosed in the embodiment of the present disclosure;
FIG. 17 is a schematic diagram of a structure of an intermediate shell disclosed in the embodiment of the present disclosure from another perspective;
FIG. 18 is a schematic diagram of a structure of a battery, a first clamping member, a second clamping member and a bottom shell disclosed in the embodiment of the present disclosure.

### Main reference numerals

100-energy storage device; 10-housing assembly; 10a-air inlet space; 10b-air outlet space; 101-top shell; 1011-air inlet; 1012-receiving groove; 1013-power plug; 102-intermediate shell; 102a-wire hole; 1021-air supply port; 1022-abutment protrusion; 1022a-first abutment surface; 1022b-groove; 1022c-inclined groove wall; 1023-latch block; 103-bottom shell; 1031-air outlet; 1032-protrusion; 1032a-inclined outer side; 1033-chamfer; 1034-protruding block; 1034a-plug slot; 1035-reinforcement rib; 11-battery; 11a-wire harness; 12-fan assembly; 13-grip; 14a-first clamping member; 14a1-protruding column; 14b-second clamping member; 14c-clamping space; 15-circuit board; 151-electronic component; 1511-functional component; 152-heat dissipation fins; 16-board mounting member; 161-vent; 162-heat dissipation through hole; 1621-top heat dissipation hole; 1622-bottom heat dissipation hole; 1623-first side heat dissipation hole; 1624-second side heat dissipation hole; 163-wiring groove; 164-sleeve structure; 1641-reinforcement rib; 17-heat insulation board; 171-avoidance gap; 17a-thermal conductive adhesive; 18-connecting bar; 181-first connecting part; 182-elastic deformation part; 183-second connecting part; 19-buffer; f1-length direction; f2-width direction; f3-height direction.

### DETAILED DESCRIPTION

In order to make the purpose, technical solution and advantages of the present disclosure clearer, the present disclosure is further described in detail in conjunction with the accompanying drawings and embodiments. It should be understood that the specific embodiments described herein are only used to explain the present disclosure and are not used to limit the present disclosure.

Unless otherwise defined, all technical and scientific terms used herein have the same meaning as those generally understood by technicians in the technical field of the present disclosure. The terms used in the specification of the present disclosure are only for the purpose of describing specific embodiments and are not intended to limit the present disclosure.

It is understood that the terms "first", "second", etc. used in the present disclosure can be used herein to describe various elements, but these elements are not limited by these terms. These terms are only used to distinguish the first element from another element. For example, without departing from the scope of the present disclosure, the first side heat dissipation hole can be called the second side heat dissipation hole, and similarly, the second side heat dissipation hole can be called the first side heat dissipation hole. Both the first side heat dissipation hole and the second side heat dissipation hole are side heat dissipation holes, but they are not the same side heat dissipation hole.

It is understood that the "connection" in the following embodiments should be understood as "electrical connection", "communication connection", etc., if the connected circuits, modules, units, etc. have electrical signals or data transmission between each other.

When used herein, the singular forms "a", "an", and "said/the" may also include plural forms, unless the context clearly indicates otherwise. It should also be understood that the terms "include/contain" or "have" specify the existence of the stated features, wholes, steps, operations, components, parts, or combinations thereof, but do not exclude the possibility of the existence or addition of one or more other features, wholes, steps, operations, components, parts, or combinations thereof. At the same time, the term "and/or" used in this specification includes any and all combinations of the relevant listed items.

The portable energy storage system in the related art is generally a low-voltage battery system, in which the voltage can be increased from 3.2V on the battery cell side to 220V on the AC side, or decreased from 220V on the AC side to 3.2V on the battery cell side during charging and discharging, and a large amount of heat will be generated in this process. Most portable energy storage systems in related art dissipate heat by air cooling. However, in actual applications, since the air inlet and outlet of the fan share the same outlet, and the air that takes away the heat of the battery cell after contacting the battery cell will be blown back to the battery by the fan, the temperature of the air in contact with the battery cell is high, making it difficult to effectively dissipate heat for the battery cell, and the battery cell temperature will also be high, failing to meet the requirement of temperature rise less than 25°C. That is, the battery cell may still be in an environment with an inappropriate temperature, which will lead to unstable battery performance, and even serious consequences such as thermal runaway of the battery and even fire and explosion, affecting the service life and safety of the battery.

In view of this, the present disclosure provides an energy storage device and an energy storage system that can blow air to the battery at a temperature close to the environment to achieve effective and efficient heat dissipation of the battery.

The energy storage device and the energy storage system in the present disclosure will be described in detail below in conjunction with the accompanying drawings.

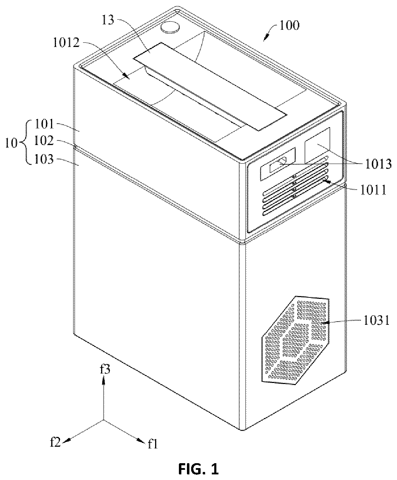

Referring to FIG. 1 to FIG. 4, one or more embodiments of the present disclosure disclose an energy storage device. The energy storage device 100 includes a housing assembly 10 and a battery 11. The battery 11 is provided in the housing assembly 10, so that the housing assembly 10 can be configured to fix and protect the battery 11. Under the action of external forces, such as falling, knocking, bumping, etc., the battery 11 and other electronic devices or structures provided inside the housing can be fixed and protected, and the battery 11 and other electronic devices or structures provided inside the housing can be sealed to prevent external impurities such as water vapor and dust from corroding the electronic devices or structures provided inside the housing assembly 10.

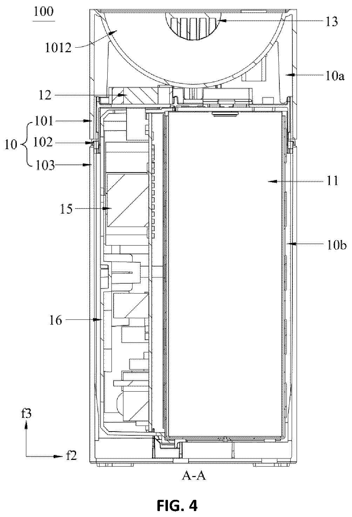

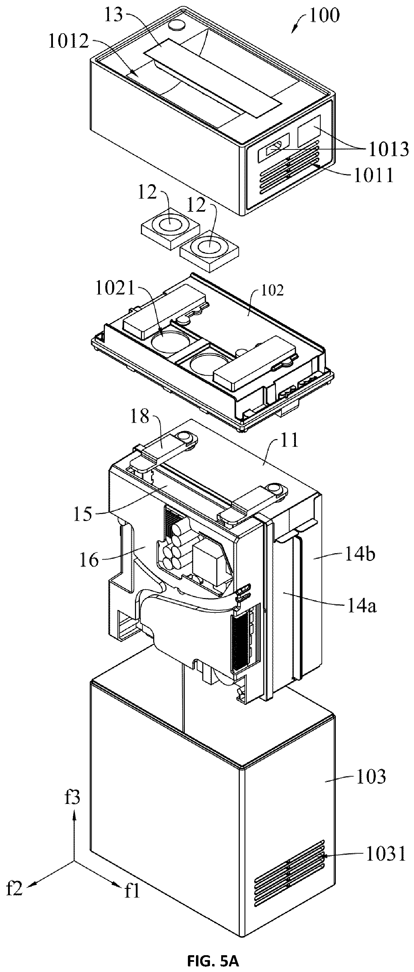

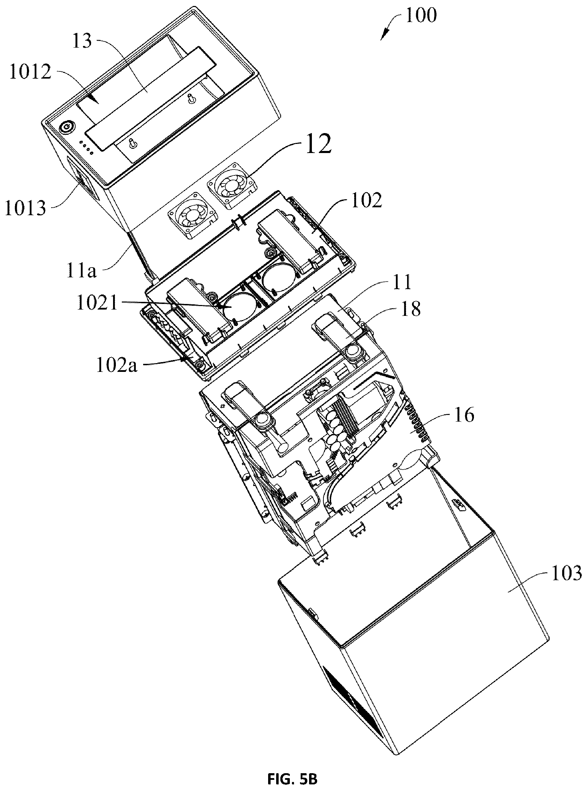

Please refer to FIG. 4 and FIG. 5A, the housing assembly 10 in the present disclosure includes a top shell 101, an intermediate shell 102 and a bottom shell 103. The intermediate shell 102 is located between the top shell 101 and the bottom shell 103, and the intermediate shell 102 is connected to the top shell 101 and the bottom shell 103 respectively. An air inlet space 10a is formed between the intermediate shell 102 and the top shell 101, and an air outlet space 10b is formed between the intermediate shell 102 and the bottom shell 103. In addition, the top shell 101 is provided with an air inlet 1011 communicating with the air inlet space 10a, the intermediate shell 102 is provided with an air supply port 1021 communicating with the air inlet space 10a and the air outlet space 10b, and the bottom shell 103 is provided with an air outlet 1031 communicating with the air outlet space 10b. The battery 11 is provided in the air outlet space 10b. The air supply port 1021 of the intermediate housing 102 is equipped with a fan assembly 12. The fan assembly 12 is configured to draw outside air into the air inlet space 10a through the air inlet 1011, and the fan assembly 12 is also configured to blow the outside air in the air inlet space 10a toward the battery 11, and discharge the outside air to the outside of the air outlet space 10b through the air outlet 1031.

The air inlet 1011 is provided on the top shell 101 and the air outlet 1031 is provided on the bottom shell 103, and the intermediate shell 102 is configured to divide the internal space of the housing assembly 10 into two relatively closed spaces, one of which is used as the air inlet space 10a and the other is used as the air outlet space 10b. Specifically, the air inlet space 10a is formed between the intermediate shell 102 and the top shell 101, and the air outlet space 10b is formed between the intermediate shell 102 and the bottom shell 103. Thus, the air in the air inlet space 10a and the air outlet space 10b can be kept relatively closed under the action of the fan assembly 12, so that when the fan assembly 12 is working, the outside air enters the air inlet space 10a through the air inlet 1011, and then blows toward the battery 11 under the action of the fan assembly 12 to take away the heat of the battery 11, and finally is discharged from the air outlet 1031 to the outside of the air outlet space 10b. In this process, the path of the outside air is: air inlet 1011→air inlet space 10a→fan assembly 12→air outlet space 10b→air outlet 1031. Under the action of the fan assembly 12, the air in the air outlet space 10b will not return to the air inlet space 10a from the air supply port, so that the air in the air inlet space 10a and the air outlet space 10b are relatively closed. That is, the inlet and outlet flow fields of the fan assembly 12 are in a completely isolated state, and the air in the air outlet space 10b will not flow into the air inlet space 10a, so as to ensure that the initial air temperature entering the air outlet space 10b will not be affected by the internal circulation air temperature, but can be close to the ambient temperature. That is, it can ensure that the temperature of the air in contact with the battery 11 can be close to the ambient temperature, so as to achieve effective heat dissipation of the battery 11, keep the temperature of the battery 11 from being too high, and then ensure the stable working state of the battery 11, and improve its working reliability and stability.

For ease of description, the present disclosure defines the air inlet area of the air inlet 1011 as S1, and the air outlet area of the air outlet 1031 as S2. It is understandable that the above definition is only for ease of description and should not be used to limit the scope of the present disclosure.

In some embodiments, the air inlet area S1 of the air inlet 1011 is slightly smaller than the air outlet area S2 of the air outlet 1031. In some examples, S1/S2 ranges from 0.8 to 0.9, for example, S1/S2=0.8, 0.81, 0.82, 0.83, 0.84, 0.85, 0.86, 0.87, 0.88, 0.89 or 0.9, etc. By making the air inlet area S1 of the air inlet 1011 slightly smaller than the air outlet area S2 of the air outlet 1031, for example, the ratio of the air inlet area S1 of the air inlet 1011 to the air outlet area S2 of the air outlet 1031 ranges from 0.8 to 0.9, the air inlet area S1 of the air inlet 1011 is close to the air outlet area S2 of the air outlet 1031, that is, the area S1 of the air inlet 1011 and the air outlet area S2 of the air outlet 1031 are nearly same, so as to avoid the area S1 of the air inlet 1011 being much smaller than the air outlet area S2 of the air outlet 1031, thereby appropriately increasing the air inlet area S1 of the air inlet 1011. Thus, it can ensure the rate at which the air in the air outlet space 10b is discharged to the outside of the air outlet space 10b through the air outlet 1031, so as to avoid the heated air lingering around the battery 11, and at the same time increase the air inlet rate, thereby facilitating the heat dissipation effect and ensuring the service life and safety of the battery 11.

In some examples, there can be one or more the air inlets 1011 and there can be one or more the air outlets 1031. The shapes of the air inlet 1011 and the air outlet 1031 may be regular or irregular. For example, the shapes of the air inlet 1011 and the air outlet 1031 may be circular, elliptical, triangular, square, rectangular, diamond or trapezoidal. The embodiment of the present disclosure does not specifically limit the shapes of the air inlet 1011 and the air outlet 1031 as long as the shapes of the air inlet 1011 and the air outlet 1031 meet the appearance requirements and the system wind resistance requirements.

In some examples, a waterproof breathable membrane (not shown) can be provided at the air inlet 1011 and the air outlet 1031, so that the air inside and outside the housing assembly 10 can be circulated through the air inlet 1011 and the air outlet 1031 to achieve the heat dissipation effect, and it can also play a waterproof role to prevent the external liquid from entering the housing assembly 10 through the air inlet 1011 and the air outlet 1031 and causing the battery 11 to short-circuit, thereby ensuring the safety of the energy storage device 100 and the performance of the battery 11.

In the present disclosure, the shape of the energy storage device 100 can be rectangular, then the shape of the housing assembly 10 is rectangular, and the shape of the battery 11 is rectangular. For example, as shown in FIG. 5A, the shapes of the energy storage device 100, the housing assembly 10 and the battery 11 are all rectangular, and the battery 11 has a length direction f1, a width direction f2 and a height direction f3, and the height direction f3 is the direction from the bottom shell 103 to the top shell 101.

Referring to FIG. 5A, the energy storage device 100 in the present disclosure further includes a grip 13. The grip 13 is connected to the top shell 101. When the energy storage device 100 is moved, the grip 13 can be held to lift the energy storage device 100 to move the energy storage device 100, so that the movement of the energy storage device 100 can be more convenient. The top surface of the top shell 101 in the height direction f3 is provided with a receiving groove 1012, and the grip 13 is at least partially received in the receiving groove 1012, and a holding space for the user's hand to extend into to hold the grip 13 is formed between the grip 13 and the receiving groove 1012. In the height direction f3, the surface of the grip 13 away from the top shell 101 is lower than the top surface of the top shell 101 or flush with the top surface of the top shell 101, so that when the shell assembly 10 is placed on a placement plane such as a desktop, a table, or the ground, the shell assembly 10 can be placed upside down. That is, the top surface of the top shell 101 can be placed on the placement plane, so that the energy storage device 100 can be placed upside down on the placement plane.

In some examples, the surface of the grip 13 away from the top shell 101 is lower than the top surface of the top shell 101. Compared with the manner in which the surface of the grip 13 away from the top shell 101 is flush with the top surface of the top shell 101, it is difficult to keep the surface of the grip 13 away from the top shell 101 and the top surface of the top shell 101 absolutely flush, that is, there is easily a height difference between the surface of the grip 13 away from the top shell 101 and the top surface of the top shell 101, which will affect the stability of the housing assembly 10 when it is placed upside down on a placement plane. Therefore, the manner in which the surface of the grip 13 away from the top shell 101 is lower than the top surface of the top shell 101 can improve the stability of the housing assembly 10 when it is placed upside down on a placement plane.

Considering that the grip 13 in the present disclosure is located on the top surface of the top shell 101, the air inlet 1011 is preferably provided on the side wall of the top shell 101 along the width direction f2. In this way, when holding the grip 13 to lift the energy storage device 100, on the one hand, it can avoid the situation where the user's body or hand blocks the air inlet 1011 and affects the air intake, which is conducive to ensuring the heat dissipation effect; on the other hand, since the grip 13 is provided on the top surface of the top shell 101, and it occupies the space on the top surface of the top shell 101, if the air inlet 1011 is also provided on the top surface of the top shell 101, it is necessary to increase the area of the top surface of the top shell 101, which is not conducive to the miniaturization design of the energy storage device 100 in the present disclosure. Therefore, providing the air inlet 1011 on the side wall of the top shell 101 is also conducive to the miniaturization design of the energy storage device 100.

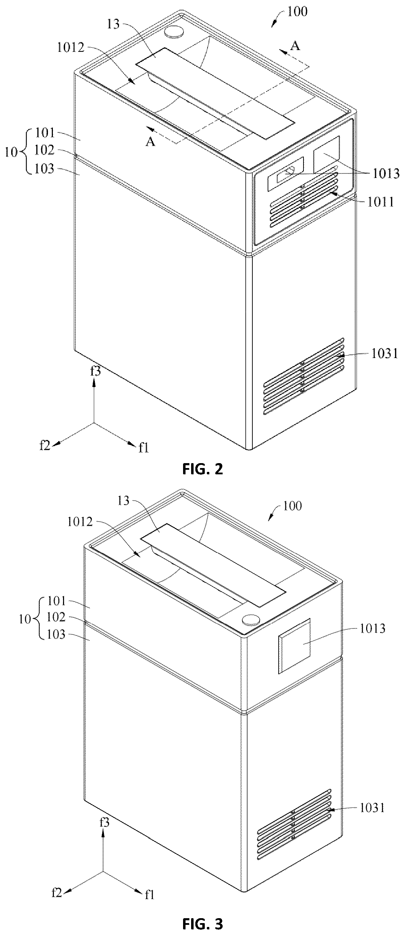

In the present disclosure, the air outlet 1031 and the air inlet 1011 may be located on the same side of the housing assembly 10. Alternatively, the air outlet 1031 and the air inlet 1011 may be located on two opposite sides of the housing assembly 10, that is, the air outlet 1031 is located on the opposite side of the air inlet 1011. Alternatively, at least one air outlet 1031 and the air inlet 1011 are located on the same side of the housing assembly 10, and at least another air outlet 1031 and the air inlet 1011 are located on two opposite sides of the housing assembly 10. For example, as shown in FIG. 2 and FIG. 3, the air inlet 1011 is located on the right side of the housing assembly 10, one air outlet 1031 is located on the right side of the housing assembly 10, and the other air outlet 1031 is located on the left side of the housing assembly 10.

The applicant has found through research that if the air outlet 1031 and the air inlet 1011 are provided on the same side of the housing assembly 10, the upper inlet air temperature will be affected by the lower outlet air temperature, making the temperature of the outside air passing through the air inlet 1011 slightly higher than the ambient temperature. Therefore, if the conditions and space meet the requirements, it is preferred to provide the air outlet 1031 on the opposite side of the air inlet 1011 to ensure that the temperature of the outside air passing through the air inlet 1011 is close to the ambient temperature, thereby ensuring that the temperature of the air in contact with the battery 11 is close to the ambient temperature, so as to achieve effective heat dissipation of the battery 11, and ensure the service life and safety of the battery 11.

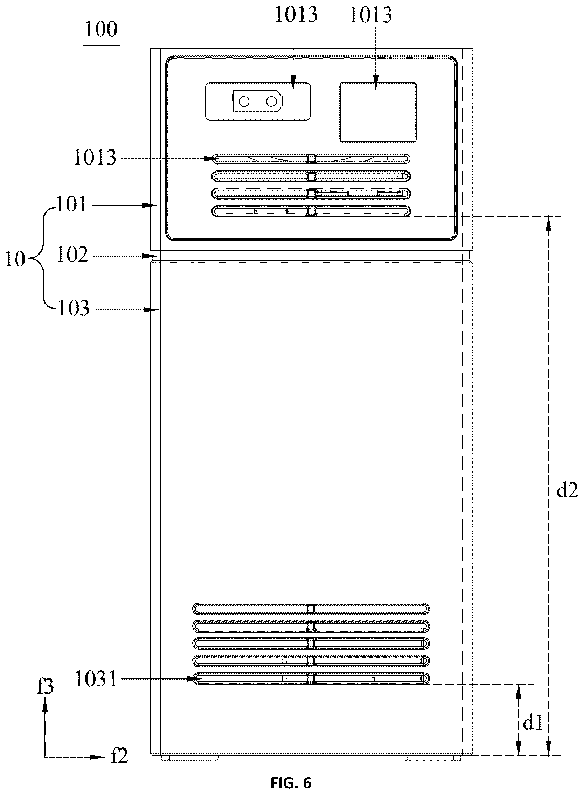

As shown in FIG. 5A and FIG. 6, when the air inlet 1011 and the air outlet 1031 are located on the same side of the housing assembly 10, the air outlet 1031 is located at the bottom of the bottom shell 103 away from the top shell 101, and/or, along the height direction f3, the distance between the air outlet 1031 and the bottom surface of the bottom shell 103 is d1, and the distance between the air inlet 1011 and the bottom surface of the bottom shell 103 is d2, d1/d2 ranges from 2/25 to 7/25, for example, d1/d2=2/25, 1/25, 3/25, 7/50, 4/25, 9/50, 1/5, 11/50, 6/25, 13/50 or 7/25, etc., so that the distance between the air inlet 1011 and the air outlet 1031 can be set very far. Through the above design, compared with providing the air outlet 1031 at a position of the bottom shell 103 close to the top shell 101, the distance between the air inlet 1011 and the air outlet 1031 can be farther, so as to avoid the situation where the hot air discharged through the air outlet 1031 rises to the air inlet 1011 and re-enters the air inlet 1011, thereby ensuring that the temperature of the outside air passing through the air inlet 1011 can be close to the ambient temperature, so as to ensure that the temperature of the air in contact with the battery 11 can be close to the ambient temperature, and then achieve the effective heat dissipation of the battery 11, and ensure the service life and safety of the battery 11.

In some embodiments, in combination with FIG. 4 to FIG. 7, the energy storage device 100 further includes a clamping assembly provided in the air outlet space 10b. The clamping assembly is connected to the intermediate shell 102, and the clamping assembly has a clamping space. Specifically, the clamping assembly includes a first clamping member 14a and a second clamping member 14b. The first clamping member 14a and the second clamping member 14b are respectively connected to the intermediate shell 102, and the first clamping member 14a and the second clamping member 14b are connected to each other. A clamping space 14c is formed between the first clamping member 14a and the second clamping member 14b, and the battery 11 is built into the clamping space 14c. On the basis of designing the housing assembly 10 as a housing structure including the top shell 101, the intermediate shell 102 and the bottom shell 103, a first clamping member 14a and a second clamping member 14b are additionally provided for clamping the battery 11. In this way, the battery 11 can be clamped by the first clamping member 14a and the second clamping member 14b to reduce the expansion degree of the battery 11, and the battery 11 can be connected to the intermediate shell 102 through the first clamping member 14a and the second clamping member 14b. Compared with the mode in which the housing includes the top shell 101 and the bottom shell 103, an additional intermediate shell 102 connected to the top shell 101 is added, and the components such as the first clamping member 14a, the second clamping member 14b and the bottom shell 103 are made to respectively connect to the intermediate shell 102, so that the intermediate shell 102 can bear part of the force of the top shell 101, that is, the intermediate shell 102 can share part of the force from the first clamping member 14a, the second clamping member 14b, the battery 11, the bottom shell 103 and other components, so as to avoid all the weight being applied to the top shell 101 and cause damage to the top shell 101, increase the structural strength of the top shell 101, and further improve the bearing capability of the top shell 101 when lifting the energy storage device 100, improve the service life of the top shell 101, and improve the service life of the housing assembly 10.

In some examples, there may be one battery 11 in the present disclosure, and the energy of the energy storage device 100 in the present disclosure may be 1KWH (1 kWh), 2KWH (2 kWh), 3KWH (3 kWh), 4KWH (4 kWh), 5KWH (5 kWh), etc., that is, the battery 11 in the present disclosure may be a large-capacity battery 11, so that a single battery 11 can constitute an energy storage device 100, realize independent charging and discharging, and reduce the occupied space of the energy storage device 100. Thus, the energy storage device 100 in the present disclosure can be adapted to more application scenarios, such as household energy storage, mobile power supply, etc. Compared with the energy storage device 100 using multiple batteries 11, the cost is lower, so that families in energy-poor areas can afford and use it, and people in energy-poor areas around the world can also obtain affordable, reliable and sustainable sources of electricity, so as to help improve the electricity consumption of production and life in energy-poor areas. Among them, "KWH" stands for kilowatt-hour.

For example, when the energy storage device 100 in the present disclosure is an energy storage device 100 with an energy of 1 kilowatt-hour (kWh), for energy-poor families, the energy storage device 100 of the present disclosure with one kWh can provide 80 hours of lighting or 16 hours of electric fan use, etc.; or, the energy storage device 100 of the present disclosure with one kWh can also promote small family businesses, such as supporting 80 hours of irrigation or 10 hours of sewing machines, etc., so that people in energy-poor areas can continue to increase their family income and improve their lives; or, in terms of public health, the energy storage device 100 of the present disclosure with one kWh can also support small medical equipment, such as small medical refrigerators, etc., which can be configured to store vaccines and medicines to improve medical conditions.

It is precisely because the battery 11 in the present disclosure is a large-capacity battery, and its expansion force is usually greater than the expansion force of multiple small-capacity batteries 11 in the related art, so the present disclosure uses the first clamping member 14a and the second clamping member 14b to clamp the battery 11 to reduce the expansion degree of the battery 11, thereby helping to ensure the service performance of the battery 11, improving the service life of the battery 11, and reducing the safety hazards of the battery 11.

On this basis, in order to meet the requirement of large expansion force, the present disclosure also limits the material of the first clamping member 14a and the second clamping member 14b to metal, such as stainless steel, iron, aluminum, aluminum alloy, copper, copper alloy, etc. The first clamping member 14a and the second clamping member 14b are made of metal. Compared with the first clamping member 14a and the second clamping member 14b being plastic parts, the hardness of the first clamping member 14a and the second clamping member 14b can reach the range of 150HB to 220HB. The first clamping member 14a and the second clamping member 14b have a strong ability to resist deformation and have a better compression effect on the battery 11 to prevent the battery 11 from expanding, so as to ensure that the battery 11 has excellent service performance, improve the service life of the battery 11 and reduce safety hazards. Among them, "HB" represents the Brinell hardness.

Referring to FIG. 5A to FIG. 7, the top shell 101 in the present disclosure is provided with a power plug 1013. The power plug 1013 is electrically connected to the battery 11 through the wire harness 11a, so that the energy storage device 100 can be connected to an external power source or electrically connected to the device to be charged through the power plug 1013 to achieve charging and discharging. For example, as shown in FIG. 2 and FIG. 3, the power plug 1013 may include three sub-power plugs 1013, one of which is configured to realize the function of the energy storage device 100 charging the device to be charged; the remaining two sub-power plugs 1013 are configured to realize the function of charging the energy storage device 100, wherein one of the remaining two sub-power plugs 1013 is a mains charging plug and the other is a photovoltaic charging plug, so as to facilitate the charging and discharging of the energy storage device 100 .

The power plug 1013 is provided on the top shell 101, so that the power plug 1013 can be provided close to the grip 13 so that the distance between the grip 13 and the power plug 1013 can be set small. Compared with the case where the power plug 1013 is provided on the bottom shell 103, since both the power plug 1013 and the grip 13 are located on the top shell 101, and the distance between the two parts is smaller, when plugging and unplugging the power cord, it is easier to apply force to pull the power cord out of the power plug 1013, or insert the power cord into the power plug 1013.

Further, the intermediate shell 102 is also provided with a wire hole 102a connected to the air inlet space 10a and the air outlet space 10b. The wire harness 11a is passed through the wire hole 102a. One end of the wire harness 11a is electrically connected to the power plug 1013, and the other end is electrically connected to the battery 11. A sealing ring (not shown) is provided between the wire harness 11a and the wire hole 102a, so that the gap between the wire harness 11a and the wire hole 102a can be sealed by the sealing ring to prevent the air in the air outlet space 10b from flowing into the air inlet space 10a through the wire hole 102a, so as to ensure that the initial air temperature entering the air outlet space 10b will not be affected by the internal circulation air temperature, but can be close to the ambient temperature, that is, to ensure that the temperature of the air in contact with the battery 11 can be close to the ambient temperature, thereby achieving effective heat dissipation of the battery 11, keeping the temperature of the battery 11 from being too high, and then ensuring the stable working state of the battery 11, and improving its working reliability and stability.

In some examples, the sealing ring can be but not limited to a silicone ring, a plastic ring, a rubber ring or a foam ring with elasticity, etc.

Referring to FIG. 4 to FIG. 7, the energy storage device 100 further includes a circuit board 15 provided in the air outlet space 10b. The main circuit board 15 is located on one side of the battery 11 in the width direction f2 thereof, and the main circuit board 15 is electrically connected to the battery 11, wherein the other end of the wire harness is electrically connected to the main circuit board 15. That is, the battery 11 and the other end of the wire harness are electrically connected through the main circuit board 15, so that when discharging, the current output by the battery 11 is first transmitted to the main circuit board 15, and then transmitted to the power plug 1013 through the wire harness, and finally transmitted to the device to be charged, so as to discharge the battery 11; and when charging, the external current is transmitted to the main circuit board 15 through the power plug 1013 and the wire harness, and then transmitted to the battery 11, so as to charge the battery 11. The main circuit board 15 is provided with an electronic component 151, and the electronic component 151 can be but is not limited to at least one of a bidirectional buck-boost converter, a bidirectional isolator, an AC-DC converter, a control chip, a control switch, and a sensor. When holding the grip 13 to lift the energy storage device 100, since the main circuit board 15 is located on one side of the battery 11 and the weight of the battery 11 is much heavier than the main circuit board 15, there is a large difference in weight between the two sides. Therefore, when the energy storage device 100 is carried while walking, it will not rub against the user's legs, thereby avoiding affecting walking.

In the present disclosure, the main circuit board 15 can be configured as a key component for monitoring, controlling and protecting the battery 11, in which a management system (Battery Management System, BMS) of the battery 11 can be integrated. On the one hand, it can monitor and manage the voltage, temperature, charging state and discharge state of the battery 11, so as to avoid dangerous situations such as overcharging, overdischarging, overcurrent and short circuit, ensure the safe operation of the battery cell and improve the working life of the battery cell; on the other hand, the energy storage device 100 based on the present disclosure is a system of battery 11 composed of a single battery 11, which is a low-voltage design. In production and maintenance, it can greatly improve the safety factor of operators and reduce the risk factor of the product. At the same time, based on the voltage conversion function provided by the internal voltage conversion circuit of the management system of the battery 11, the low-voltage system of the battery 11 can output high voltage adapted to different application scenarios, that is, flexible buck-boost can be achieved while reducing the difficulty of operation.

For example, functional circuits with different functions are provided in the main circuit board 15. For example, bidirectional step-up/step-down circuits (such as Buck/Boost circuits), bidirectional isolation circuits (such as LLC circuits), and AC/DC conversion circuits (such as CCM Totem-Pole, continuous conduction mode totem poles), etc. It can be understood that in actual use, the main circuit board 15 can integrate different functional circuits in the main circuit board 15 according to the application scenario of the energy storage device 100 to meet application requirements.

Based on the fact that the energy storage device 100 in the present disclosure is a battery system composed of a single battery, which is a low-voltage design, usually, the voltage value of a single battery 11 is relatively low, generally about 3.2V, then when the energy storage device 100 in the present disclosure is discharged, the voltage 3.2V DC output by the battery 11 will first be boosted to 310V DC through the bidirectional buck-boost circuit on the main circuit board 15, and then inverted to 220V AC through the AC-DC conversion circuit on the main circuit board 15, so as to meet the charging requirements of the device to be charged and realize the discharge of the energy storage device 100; and when the energy storage device 100 in the present disclosure is charged, the external input 220V AC is first inverted to 310V DC through the AC-DC conversion circuit on the main circuit board 15, and then stepped down to 3.2V DC through the bidirectional buck-boost circuit on the main circuit board 15, so as to meet the charging requirements of the battery 11 and realize the charging of the energy storage device 100.

In some embodiments, the main circuit board 15 has a heat concentration area, and the air outlet 1031 is provided near the heat concentration area, so that the heat of the heat concentration area of the main circuit board 15 can quickly reach the outside of the bottom shell 103 through the air outlet 1031, thereby accelerating the heat dissipation of the heat concentration area of the main circuit board 15, accelerating the heat dissipation rate of the main circuit board 15, reducing the temperature of the main circuit board 15, and increasing the service life of the main circuit board 15. The heat concentration area of the main circuit board 15 is mainly the area where high-heat generating devices such as bidirectional buck-boost converters, bidirectional isolators, and AC-DC converters are concentrated.

In some embodiments, in combination with FIG. 5A, FIG. 7 and FIG. 8, the electronic component 151 includes a functional device 1511 whose temperature is higher than or equal to 110°C in an operating state. The functional device 1511 may be but is not limited to at least one of a bidirectional buck-boost converter, a bidirectional isolator and an AC-DC converter, and the temperature of the functional device 1511 may be but is not limited to 110°C, 112°C, 114.4°C, 115°C, 115.4°C, 117.4°C, 118.06°C, 120°C, 120.9°C, 122.5°C, 123.09°C, 125.7°C, 129.06°C, 130°C, 130.5°C, 132.56°C, 134.5°C, 135.18°C, 137.6°C, 139.5°C, etc. The energy storage device 100 further includes heat dissipation fins 152. The heat dissipation fins 152 are provided on the side of the functional device 1511 away from the battery 11, and the heat dissipation fins 152 are provided to extend along the axial direction of the fan assembly 12. According to the present disclosure, the heat dissipation fins 152 are provided on the side of the functional device 1511 away from the battery 11. That is, a heat dissipation component is locally added to the area with high temperature of the main circuit board 15, which can quickly dissipate heat and cool down the functional device 1511 with a relatively high temperature in the running state, avoid safety accidents, and improve the safety of use; at the same time, the heat dissipation fins 152 are also provided to extend along the axial direction of the fan assembly 12, so that the extending direction of the heat dissipation fins 152 can be kept consistent with the wind direction as much as possible. Thus, the heat dissipation fins 152 can be configured to effectively guide the gas flowing through the functional device 1511 (that is, the gas blown out of the fan assembly), so that the gas can fully exchange heat with the functional device 1511, improve the heat dissipation effect of the functional device 1511, and have a better heat dissipation effect.

In some examples, the height of the heat dissipation fins 152 protruding relative to the main circuit board 15 is as high as possible to avoid the flow field after passing through the heat dissipation fins 152 being blocked by other devices on the main circuit board 15.

In some embodiments, the air outlet 1031 is provided near the functional device 1511. In other words, the projection of the functional device 1511 on the side wall of the bottom shell 103 is at least partially located in the air outlet 1031, so that the gas that exchanges heat with the functional device 1511 can be quickly discharged from the bottom shell 103, avoiding the situation where the gas stays around the functional device 1511 for a long time so that it is difficult for the functional device 1511 to quickly cool down in a short time, which is conducive to improving the heat dissipation effect of the fan assembly 12 on the functional device 1511.

In some embodiments, in combination with FIG. 5A and FIG. 7 to FIG. 9, the energy storage device 100 further includes a mainboard mounting member 16 provided in the air outlet space 10b. The mainboard mounting member 16 is connected to the battery 11. Specifically, the mainboard mounting member 16 is connected to the first clamping member 14a, and the mainboard mounting member 16 is located on one side of the battery 11 along its width direction f2. The main circuit board 15 is mounted on the mainboard mounting member 16, and there is a gap between the main circuit board 15 and the battery 11, so that expansion space can be provided for the battery 11 to avoid squeezing the main circuit board 15 when the battery 11 expands, thereby protecting the main circuit board 15.

Therefore, in the design of the present disclosure, in order to prevent the battery 11 from squeezing the main circuit board 15 when it expands, not only the first clamping member 14a and the second clamping member 14b are provided to clamp the battery 11 to reduce the expansion degree of the battery 11, or prevent the battery 11 from expanding, thereby preventing the battery 11 from squeezing the main circuit board 15 when it expands; a mainboard mounting member 16 is further provided to mount the main circuit board 15 on the first clamping member 14a through the mainboard mounting member 16. The main circuit board 15 is mounted and supported by the mainboard mounting member 16, so that there can be a gap between the main circuit board 15 and the first clamping member 14a, providing expansion space for the battery 11, so as to better prevent the battery 11 from squeezing the main circuit board 15 when it expands, and provide better and more effective protection for the main circuit board 15.

In some embodiments, the mainboard mounting member 16 can be a support column structure or a shell structure with a cavity, etc. When the mainboard mounting member 16 is a support column structure, the mainboard mounting member 16 is convexly provided on the surface of the first clamping member 14a away from the battery 11, and the main circuit board 15 is provided on the end surface of the mainboard mounting member 16 away from the first clamping member 14a, so that there is a distance between the main circuit board 15 and the first clamping member 14a. When the mainboard mounting member 16 is a shell structure with a cavity, the main circuit board 15 is installed in the cavity of the mainboard mounting member 16, so that there is a distance between the main circuit board 15 and the first clamping member 14a.

In some embodiments, the mainboard mounting member 16 is a shell structure with a cavity, which not only allows spacing between the main circuit board 15 and the first clamping member 14a to avoid squeezing the main circuit board 15 when the battery 11 expands, but also protects the main circuit board 15 from being squeezed when it is squeezed externally, thereby ensuring the service performance and service life of the main circuit board 15.

When the mainboard mounting member 16 is a shell structure with a cavity, it is also to be noted that, in the present disclosure, even if the battery 11 expands, causing the first clamping member 14a to deform, since the mainboard mounting member 16 is connected to the first clamping member 14a, and the main circuit board 15 is mounted on the mainboard mounting member 16, when the battery 11 expands, the mainboard mounting member 16 will move along the expanding direction of the battery 11 (outward), and the main circuit board 15 will move outward with the mainboard mounting member 16. In this way, the main circuit board 15 can maintain a certain distance from the mainboard mounting member 16 even when the battery 11 expands, so that even if the battery 11 expands, the main circuit board 15 will not be squeezed. Moreover, usually, the side of the main circuit board 15 away from the first clamping member 14a is provided with an electronic component 151. That is, the component is located on the side of the main circuit board 15 toward the mainboard mounting member 16. Thus, when the battery 11 expands to a certain extent and cannot squeeze the bottom shell 103, and the distance between the first clamping member 14a and the main circuit board 15 is shortened, even if squeezed, it is the side of the main circuit board 15 without the electronic component 151, so that the electronic component 151 on the main circuit board 15 can be further effectively protected.

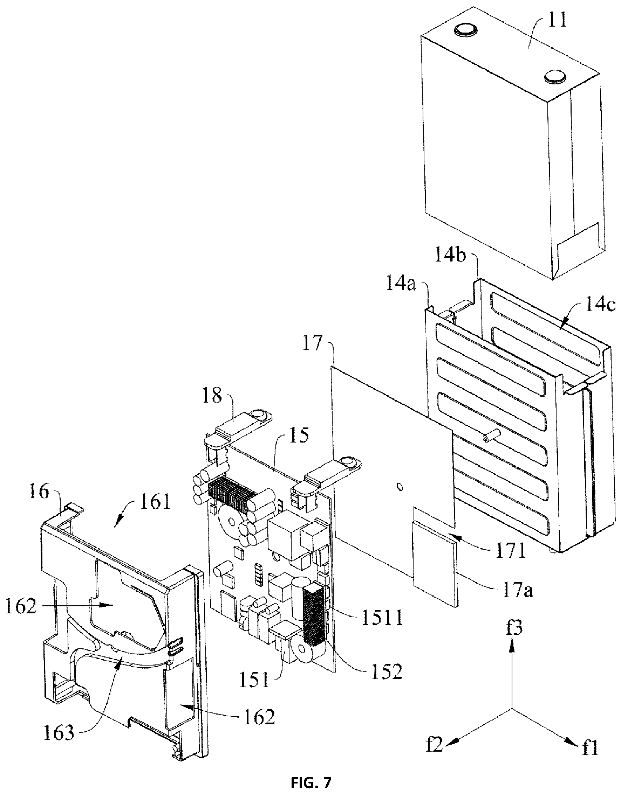

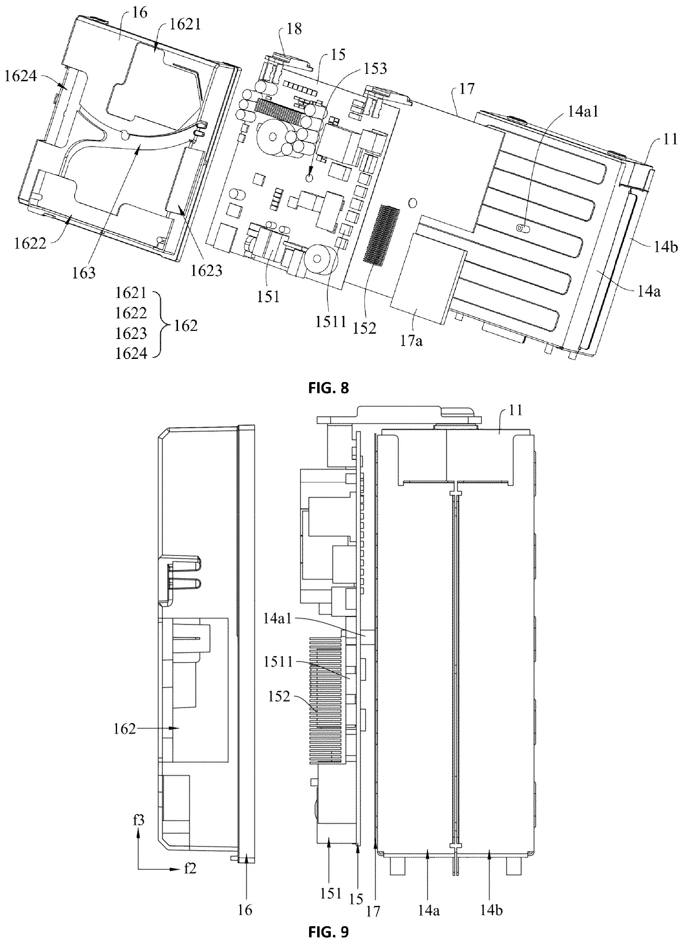

Referring to FIG. 7 and FIG. 8, the mainboard mounting member 16 in the present disclosure is provided with a vent 161 and a heat dissipation through hole 162 connected to the cavity, and the vent 161 is located on the top surface of the mainboard mounting member 16 adjacent to the fan assembly 12. The heat dissipation through hole 162 includes a top heat dissipation hole 1621 and a bottom heat dissipation hole 1622. The top heat dissipation hole 1621 is provided near the vent 161, and the bottom heat dissipation hole 1622 is located at the bottom of the mainboard mounting member 16 away from the fan assembly 12; and/or, the heat dissipation through hole 162 includes a first side heat dissipation hole 1623 and a second side heat dissipation hole 1624. The first side heat dissipation hole 1623 and the second side heat dissipation hole 1624 are respectively located on both sides of the mainboard mounting member 16 along the length direction f1 of the battery 11, and the first side heat dissipation hole 1623 and the air outlet 1031 are located on the same side of the housing assembly 10, and the second side heat dissipation hole 1624 is located on the opposite side of the air outlet 1031.

Specifically, when the fan assembly 12 is started, the outside air enters the air inlet space 10a from the air inlet 1011 under the action of the fan assembly 12, and enters the cavity of the mainboard mounting member 16 through the vent 161 under the action of the fan assembly 12 to blow toward the electronic component 151 and flow through the electronic component 151, taking away the heat of the electronic component 151, and then discharges to the outside of the mainboard mounting member 16 from the top heat dissipation hole 1621 and the bottom heat dissipation hole 1622, or from the first side heat dissipation hole 1623 and the second side heat dissipation hole 1624, or from the top heat dissipation hole 1621, the bottom heat dissipation hole 1622, the first side heat dissipation hole 1623 and the second side heat dissipation hole 1624, and finally discharges from the air outlet 1031 to the outside of the bottom shell 103, thereby achieving a heat dissipation effect.

Through the above design, the mainboard mounting member 16 has a plurality of heat dissipation holes 162, so that when the fan is started to dissipate heat for the electronic component 151, the gas can flow out from multiple directions to the outside of the mainboard mounting member 16, which can increase the gas circulation rate and improve the heat dissipation effect. At the same time, since the second side heat dissipation hole 1624 is located on the opposite side of the air outlet 1031, and the bottom heat dissipation hole 1622 is closer to the air outlet 1031 than the second side heat dissipation hole 1624, the local fluid flowing out of the second side heat dissipation hole 1624 flows into the bottom heat dissipation hole 1622 after heat exchange with the bottom shell 103, and then flows out from the air outlet 1031, thereby further reducing the fluid temperature of the bottom heat dissipation hole 1622, so that the temperature of the electronic components 151 on the main circuit board 15 can be further reduced, and the heat dissipation effect is better.

In some examples, the projection of an electronic component 151 with a relatively large heat generation, for example, an electronic component 151 with a temperature greater than or equal to 110°C in the operating state, on the mainboard mounting member 16 is at least partially located in the top heat dissipation hole 1621, so that the heat of the electronic component 151 with a relatively large heat generation can be quickly discharged to the outside of the mainboard mounting member 16, thereby helping to improve the heat dissipation efficiency; and, the top heat dissipation hole 1621 is a heat dissipation hole structure with a completely hollow interior, rather than a heat dissipation hole structure with a plurality of staggered ribs arranged inside to divide the interior into a plurality of small heat dissipation holes, nor is it a heat dissipation hole structure formed by arranging a plurality of small heat dissipation holes provided at intervals, so that the top heat dissipation hole 1621 has a larger heat dissipation area, and can more quickly discharge the heat of the electronic component 151 with a relatively large heat generation to the outside of the mainboard mounting member 16, thereby further improving the heat dissipation efficiency.

In some embodiments, the outer surface of the mainboard mounting member 16 is provided with a wiring groove 163, and the wire harness connected to the main circuit board 15 and the power plug 1013 is provided in the wiring groove 163, so that the wiring groove 163 can be configured to bind and guide the wire harness, and the line layout can be more concise, thereby avoiding the problems of chaotic, cross-distributed, and entangled wire harnesses, and helping to reduce the occupation of the internal space of the housing by the wire harnesses.

Further, the bottom heat dissipation hole 1622 and the second side heat dissipation hole 1624 can also allow the wire harnesses to pass through and enter the cavity of the mainboard mounting member 16. That is, one end of a part of the wire harnesses can pass through the bottom heat dissipation hole 1622 to enter the cavity of the mainboard mounting member 16 to be electrically connected to the main circuit board 15 (such as the first conductive protrusion on the main circuit board 15), and one end of another part of the wire harnesses can pass through the second side heat dissipation hole 1624 to enter the cavity of the mainboard mounting member 16 to be electrically connected to the main circuit board 15 (such as the second conductive protrusion on the main circuit board 15).

In some embodiments, in the length direction of the energy storage device, the length of the mainboard mounting member 16 is L0, the length of the bottom heat dissipation hole 1622 is L1, and the length of the second side heat dissipation hole 1624 is L2. In the height direction of the energy storage device, the width of the mainboard mounting member 16 is D0, the width of the bottom heat dissipation hole 1622 is D1, and the width of the second side heat dissipation hole 1624 is D2, where L1/L0 ranges from 0.85 to 0.95, for example, L1/L0=0.85, 0.86, 0.87, 0.88, 0.89, 0.9, 0.91, 0.92, 0.93, 0.94 or 0.95; L2/L0 ranges from 0.20 to 0.30, for example, L2/L0=0.20, 0.21, 0.22, 0.23, 0.24, 0.25, 0.26, 0.27, 0.28, 0.29 or 0.30; D1/D0 ranges from 0.20 to 0.30, for example, D2/D0=0.20, 0.21, 0.22, 0.23, 0.24, 0.25, 0.26, 0.27, 0.28, 0.29 or 0.30; D2/D0 ranges from 0.45 to 0.60, for example, D2/D0=0.45, 0.46, 0.47, 0.48, 0.49, 0.5, 0.51, 0.52, 0.53, 0.54, 0.55, 0.56, 0.57, 0.58, 0.59 or 0.60. When the bottom heat dissipation hole 1622 and the second side heat dissipation hole 1624 meet the above-mentioned size relationship, the bottom heat dissipation hole 1622 and the second side heat dissipation hole 1624 can have a larger diameter, so as to avoid the mainboard mounting member 16 from blocking the operator's hands when the other end of the wire harness is plugged into the main circuit board 15 from the bottom heat dissipation hole 1622 and the second side heat dissipation hole 1624, so as to facilitate the plugging of the wire harness.

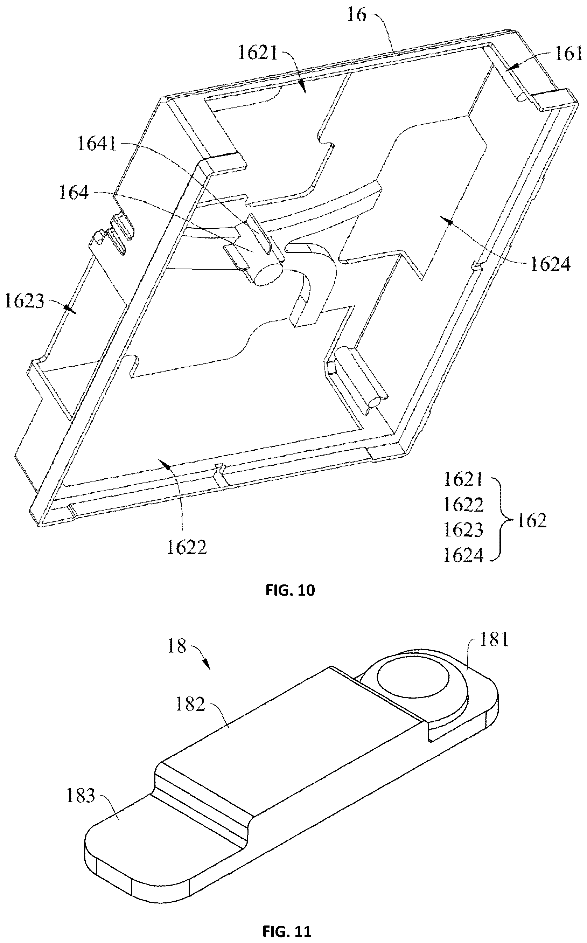

In some embodiments, as shown in FIG. 8 and FIG. 10, a protruding column 14a1 may be convexly provided in the middle of the first clamping member 14a. The main circuit board 15 is provided with a connecting hole, and the protruding column 14a1 is passed through the connecting hole on the main circuit board 15. The main circuit board 15 is usually installed on the mainboard mounting member 16 first, and then the main circuit board 15 and the mainboard mounting member 16 are assembled as a whole to the first clamping member 14a. Thus, when the main circuit board 15 and the mainboard mounting member 16 are assembled to the first clamping member 14a, the assembly of the main circuit board 15 and the main board mounting member 16 as a whole can be positioned by means of the cooperation between the protruding column 14a1 and the connection hole, thereby facilitating the assembly between the main circuit board 15 and the mainboard mounting member 16 as a whole and the first clamping member 14a.

Further, the protruding column 14a1 can pass through the connection hole and connect to the inner wall surface of the mainboard mounting member 16. Thus, the protruding column 14a1 can be configured to support the middle part of the mainboard mounting member 16, thereby improving the bearing capability of the mainboard mounting member 16, so as to avoid the main circuit board 15 and the battery 11 from being squeezed when being squeezed externally, thereby protecting the main circuit board 15 and the battery 11.

In some embodiments, the mainboard mounting member 16 is provided with a sleeve structure 164 located in the cavity of the mainboard mounting member 16, and the protruding column 14a1 on the first clamping member 14a is inserted into the hollow part of the sleeve structure 164 to achieve the connection between the protruding column 14a1 and the mainboard mounting member 16, thereby improving the connection stability and installation convenience between the protruding column 14a1 and the mainboard mounting member 16.

In some examples, the outer peripheral surface of the sleeve structure 164 is provided with a plurality of reinforcing ribs 1641. The plurality of reinforcing ribs 1641 are arranged at intervals in the cavity of the mainboard mounting member 16 along the circumferential direction of the sleeve structure 164, and the plurality of reinforcing ribs 1641 are respectively connected to the inner wall surface of the mainboard mounting member 16. The provision of the reinforcing ribs 1641 helps to further enhance the structural strength of the mainboard mounting member 16 and improve the bearing capability of the mainboard mounting member 16, so as to avoid the main circuit board 15 and the battery 11 from being squeezed when being squeezed externally, thereby protecting the main circuit board 15 and the battery 11.

In some embodiments, as shown in FIG. 5A, FIG. 7 and FIG. 8, the energy storage device 100 further includes a heat insulation board 17provided in the air outlet space 10b. The heat insulation board 17 is provided between the main circuit board 15 and the battery 11, specifically, between the main circuit board 15 and the first clamping member 14a. Thus, a heat insulation effect can be achieved, so as to reduce or prevent the heat generated by the battery 11 during thermal runaway from spreading to the main circuit board 15, thereby preventing the fire from spreading to the main circuit board 15 when the battery 11 catches fire; or, the heat insulation board 17 is configured to weaken the heat transferred from the main circuit board 15 to the battery 11, so as to prevent the battery 11 from being overheated and causing thermal runaway or even fire and explosion, thereby ensuring the service life and safety of the battery 11.

It can be understood that the temperature of the main circuit board 15 and the battery 11 can be controlled by adjusting the size of the heat insulation board 17. For example, in a case where the temperature of the main circuit board 15 is low, if the temperature of the battery 11 is expected to be further reduced, the area of the heat insulation board 17 can be increased to block the airflow that is heated after passing through the main circuit board 15 and prevent the heated airflow from bypassing the battery 11 and then flowing out from the air outlet 1031 of the bottom shell 103.

For example, the heat insulation board 17 can be a mica board or a metal plate with a heat insulation coating on the surface. The use of the above-mentioned heat insulation board 17 can better isolate the heat from spreading to the main circuit board 15 after a battery 11 is thermally runaway, and the heat insulation effect is better. At the same time, the mica board can also prevent electrical breakdown and damage to the main circuit board 15. The heat insulation coating can be mainly composed of a thermal insulation material, which can be but not limited to glass fiber, asbestos, rock wool, silicate, aerogel felt, vacuum board, etc., with good insulation ability to prevent heat exchange between the battery 11 and the main circuit board 15.

In some embodiments, the material of the clamping assembly is metal. That is, the material of the first clamping member 14a and the second clamping member 14b is metal. The heat insulation plate 17 is provided with a clearance notch 171, and the clearance notch 171 is provided with a thermal conductive adhesive 17a. The thermal conductive adhesive 17a is bonded between the main circuit board 15 and the first clamping member 14a of the clamping assembly. Through the above design, on the basis of weakening the heat transfer between the main circuit board 15 and the battery 11, the first clamping member 14a and the second clamping member 14b can be configured to clamp the battery 11 to reduce the expanding degree of the battery 11, and the thermal conductive adhesive 17a can also be configured to conduct the heat of the main circuit board 15 to the first clamping member 14a and the second clamping member 14b of the metal material, so as to diffuse the heat and achieve a better heat dissipation effect.

In some embodiments, as shown in FIG. 5A and FIG. 11, the main circuit board 15 is electrically connected to the battery 11 through the connecting bar 18. When discharging, the current output by the battery 11 is first transmitted to the main circuit board 15 through the connecting bar 18, and then transmitted to the power plug 1013 through the wire harness, and finally transmitted to the device to be charged, so as to discharge the battery 11; and when charging, the external current is transmitted to the main circuit board 15 through the power plug 1013 and the wire harness, and then transmitted to the battery 11 through the connecting bar 18, so as to charge the battery 11. The connecting bar 18 includes a first connecting part 181, an elastic deformation part 182, and a second connecting part 183 connected in sequence. The first connecting part 181 is electrically connected to the pole of the battery 11, and the second connecting part 183 is electrically connected to the main circuit board 15.

During transportation, there may be a relative movement between the battery 11 and the main circuit board 15, which might be inevitable. At the same time, since the connecting bar 18 is connected between the battery 11 and the main circuit board 15, when there is a relative movement between the battery 11 and the main circuit board 15, for example, when the battery 11 moves relative to the main circuit board 15, or when the main circuit board 15 moves relative to the battery 11, the connecting bar 18 will be pulled by the battery 11 and the main circuit board 15. The connecting bar 18 includes an elastic deformation part 182. When the connecting bar 18 is pulled by the battery 11 and the main circuit board 15, it can deform adaptively, better absorb energy and impact, and prevent damage to the welding position of the first connecting part 181 and the battery 11 and the welding position of the second connecting part 183 and the main circuit board 15, thereby avoiding the situation of circuit breaking.

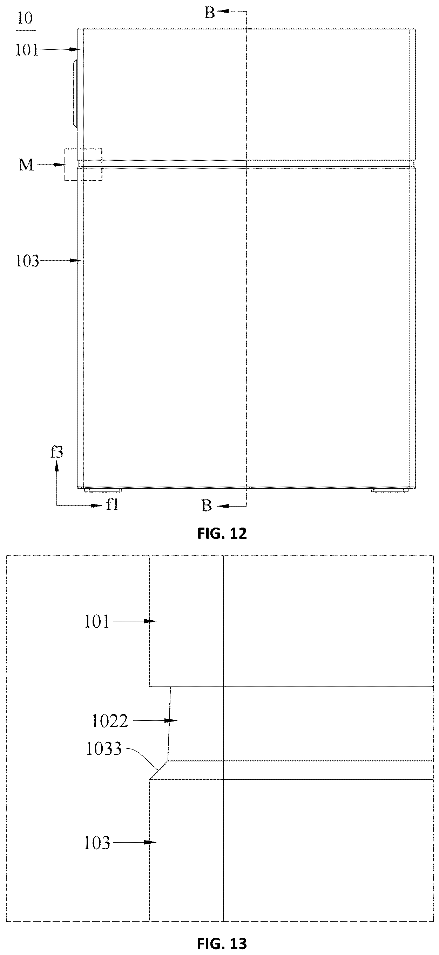

In some embodiments, in combination with FIG. 12 to FIG. 15, the outer circumferential surface of the intermediate shell 102 is convexly provided with an abutment protrusion 1022. The abutment protrusion 1022 is arranged around the circumference of the intermediate shell 102. One end of the intermediate shell 102 is embedded in the bottom shell 103. The abutment protrusion 1022 is located outside the bottom shell 103, and the abutment protrusion 1022 has a first abutment surface 1022a provided toward the bottom surface of the bottom shell 103. The first abutment surface 1022a abuts against the end surface of the bottom shell 103, and one of the first abutment surface 1022a and the end surface of the bottom shell 103 is provided with a groove 1022b, and the other one of the first abutment surface 1022a and the end surface of the bottom shell 103 is provided with a protrusion 1032. That is, when the first abutment surface 1022a is provided with a groove 1022b, the end surface of the bottom shell 103 is provided with a protrusion 1032; and when the first abutment surface 1022a is provided with a protrusion 1032, the end surface of the bottom shell 103 is provided with a groove 1022b, and the protrusion 1032 is embedded in the groove 1022b.

Usually, when the energy storage device 100 is placed on a placement plane (such as the ground, a desktop, a countertop, etc.), the energy storage device 100 is placed upright on the placement plane. That is, the bottom surface of the bottom shell 103 is in contact with the placement plane, so the liquid on the housing assembly 10 generally flows from top to bottom. For example, on a rainy day, when rain falls down and drips onto the top shell 101, the rainwater on the top shell 101 usually flows from top to bottom under the action of gravity. Even if the rainwater flows into the gap between the first abutment surface 1022a and the end surface of the bottom shell 103, in a case where the first abutment surface 1022a is provided with a groove 1022b, and the end surface of the bottom shell 103 is provided with a protrusion embedded in the groove 1022b, when the bottom shell is in contact with the placement plane to place the energy storage device upright, the protrusion 1032 can be equivalent to forming an upward barrier, and rainwater cannot go up along the protrusion 1032 under the action of gravity, thereby preventing rainwater from entering the interior of the housing assembly 10 to achieve a waterproof design; and in a case where the top shell is in contact with the placement plane to place the energy storage device upside down, even if rainwater flows into the gap between the first abutment surface 1022a and the end face of the bottom shell 103, the rainwater will flow into the groove 1022b under the action of gravity, so that the rainwater is temporarily stored in the groove 1022b, thereby preventing rainwater from entering the interior of the housing assembly 10 to achieve a waterproof design. In a case where the end surface of the bottom shell 103 is provided with a groove 1022b, and the first abutment surface 1022a is provided with a protrusion 1032 embedded in the groove 1022b, when the bottom shell contacts the placement plane to place the energy storage device upright, even if rainwater flows into the gap between the first abutment surface 1022a and the end surface of the bottom shell 103, the rainwater will flow into the groove 1022b under the action of gravity, so that the rainwater is temporarily stored in the groove 1022b, thereby preventing the rainwater from entering the interior of the housing assembly 10, so as to achieve a waterproof design; and when the top shell contacts the placement plane to place the energy storage device upside down, the protrusion 1032 can be equivalent to forming an upward barrier, and the rainwater cannot go up along the protrusion 1032 under the action of gravity, thereby preventing the rainwater from entering the interior of the housing assembly 10, so as to achieve a waterproof design.

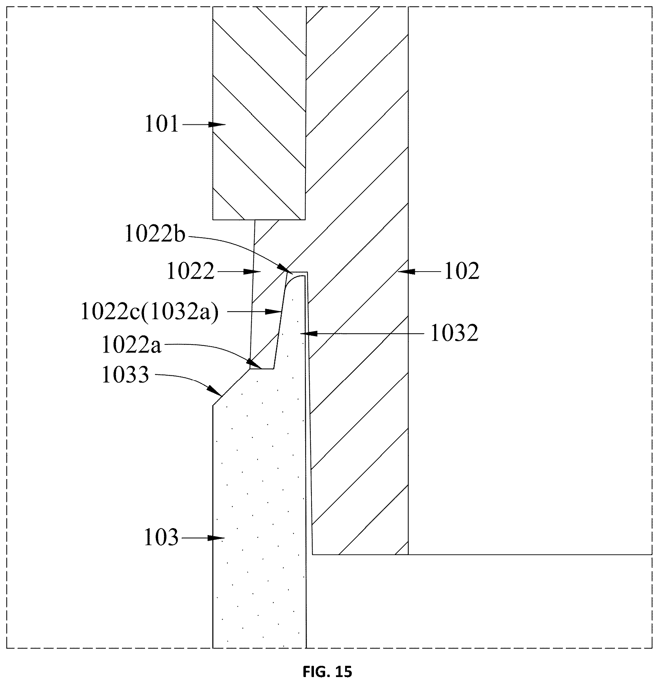

As shown in FIG. 15, when the first abutment surface 1022a is provided with a groove 1022b, and the end surface of the bottom shell 103 is provided with a protrusion 1032, the protrusion 1032 has an inclined outer side surface 1032a. The inclined outer side surface 1032a and the end surface of the bottom shell 103 are connected at an obtuse angle. The groove 1022b has an inclined groove wall surface 1022c that fits the inclined outer side surface 1032a. In this way, on the one hand, the climbing slope of the external liquid can be increased, and the difficulty of the external liquid passing over the protrusion 1032 and entering the interior of the housing assembly 10 can be increased, thereby further improving the waterproof performance of the housing assembly 10; on the other hand, during assembly, the cooperation of the inclined outer side surface 1032a and the inclined groove wall surface 1022c can be used to guide the protrusion 1032 to be inserted into the groove 1022b, which facilitates the assembly between the intermediate shell 102 and the bottom shell 103.

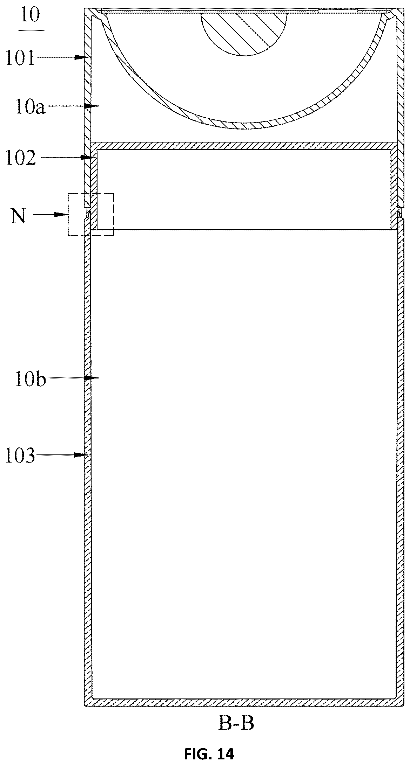

In some embodiments, as shown in FIG. 14 and FIG. 15, the other end of the intermediate shell 102 is embedded in the top shell 101, and the abutment protrusion 1022 is located between the top shell 101 and the bottom shell 103. In the protruding direction of the abutment protrusion 1022 relative to the outer peripheral surface of the intermediate shell 102, the outer peripheral surface of the abutment protrusion 1022 is lower than the outer peripheral surface of the top shell 101, and the outer peripheral surface of the abutment protrusion 1022 is lower than the outer peripheral surface of the bottom shell 103. The connection between the outer peripheral surface of the bottom shell 103 and the end surface of the bottom shell 103 is provided with a chamfer 1033, such as a bevel chamfer or a round chamfer.

When the energy storage device 100 of the present disclosure is placed outdoors and encounters rain, rainwater will flow from the outer peripheral surface of the top shell 101 toward the bottom shell 103. When the rainwater flows to the edge of the top shell 101, since the outer peripheral surface of the intermediate shell 102 is lower than the outer peripheral surface of the top shell 101, and the outer peripheral surface of the abutment protrusion 1022 is lower than the outer peripheral surface of the bottom shell 103, the rainwater passes over the abutment protrusion 1022 under the action of its gravity, and directly drips onto the outer peripheral surface of the bottom shell 103 and continues to flow downward along the outer peripheral surface of the bottom shell 103. Or, even if the rainwater drips on the end surface of the bottom shell 103, due to the existence of the protrusion 1032, the rainwater will not penetrate into the interior of the housing assembly 10 from the connection between the top shell 101 and the intermediate shell 102 and the connection between the bottom shell 103 and the intermediate shell 102. Moreover, the existence of the bevel chamfer or the round chamfer can guide the rainwater dripping on the end surface of the bottom shell 103 to the outer peripheral surface of the bottom shell 103, so that the rainwater continues to flow downward along the outer peripheral surface of the bottom shell 103, which can further improve the waterproof performance of the housing assembly 10.

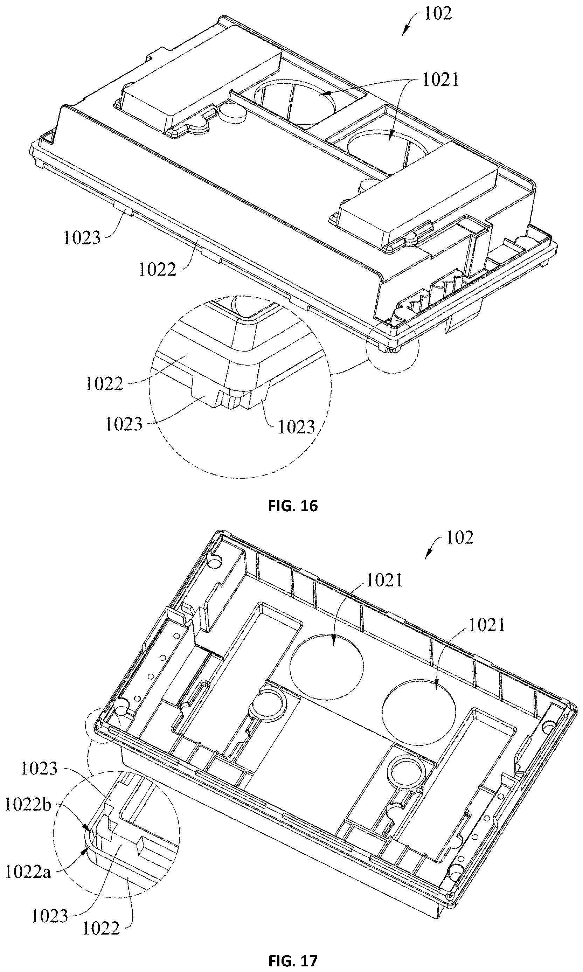

In some embodiments, as shown in FIG. 16, FIG. 17 and FIG. 18, the shape of the intermediate shell 102 is rectangular. One end of the intermediate shell 102 is convexly provided with a plurality of spaced latch blocks 1023. The plurality of latch blocks 1023 are arranged along the axial direction of the intermediate shell 102 on the outer peripheral surface of the intermediate housing 102, and the inner side wall of the bottom shell 103 is convexly provided with a plurality of protruding blocks 1034. The plurality of protruding blocks 1034 are arranged along the peripheral direction of the bottom shell 103, and each protruding block 1034 is provided with a plug-in groove 1034a. A latch block 1023 is embedded in a plug-in groove 1034a to realize the connection between the intermediate shell 102 and the bottom shell 103, so as to facilitate the assembly and installation between the intermediate shell 102 and the bottom shell 103.

In some examples, the bottom of each protruding block 1034 is connected to a plurality of reinforcing ribs 1035. The plurality of reinforcing ribs 1035 are arranged along the peripheral direction of the bottom shell 103 and protrude on the inner side wall of the bottom shell 103, so that the plurality of reinforcing ribs 1035 can be used to strengthen the structure of the protruding blocks 1034.

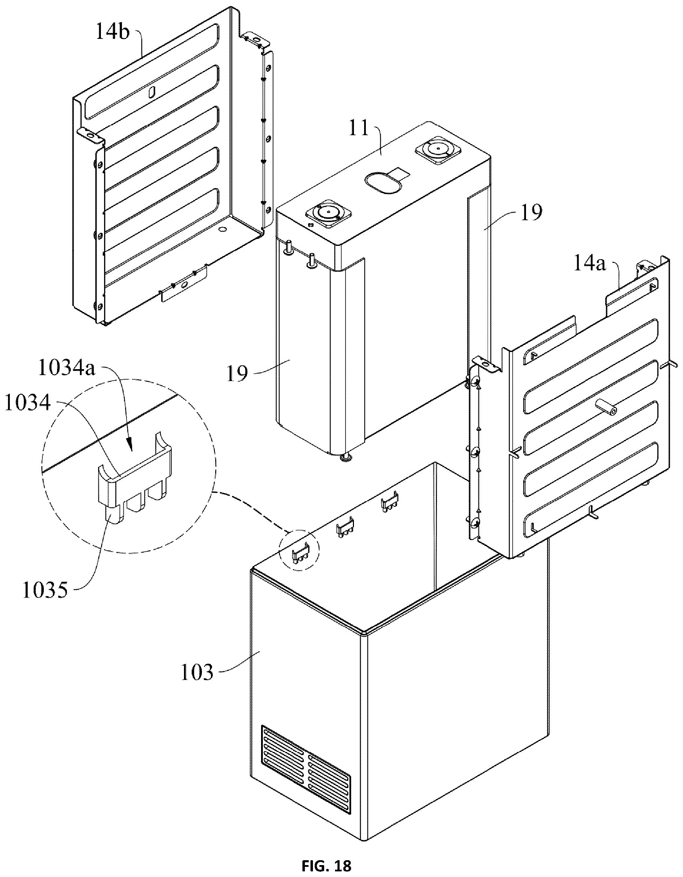

In some embodiments, as shown in FIG. 18, the energy storage device further includes a buffer 19. The buffer 19 is wrapped around the outer peripheral surface and bottom surface of the battery 11, so that the buffer 19 can be used to have a certain buffering effect on the battery 11, avoiding hard contact between the battery 11 and the bottom shell 103 or hard contact between the battery 11 and the clamping assembly (i.e., the first clamping member 14a and the second clamping member 14b), thereby reducing the risk of damage to the battery 11 caused by the bottom shell 103 or the clamping assembly directly acting on the battery 11, thereby protecting the battery.

Specifically, when the battery 11 is directly provided on the bottom shell 103, the buffer 19 is located between the battery 11 and the bottom shell 103, so that the contact between the battery 11 and the bottom shell 103 can be avoided to be a hard contact, thereby reducing the risk of damage to the battery 11 caused by the direct action of the bottom shell 103 on the battery 11, and protecting the battery; and when the battery 11 is provided on the bottom shell 103 through the clamping assembly, the buffer 19 is located between the battery 11 and the clamping assembly, thereby avoiding the contact between the battery 11 and the clamping assembly to be a hard contact, thereby reducing the risk of damage to the battery 11 caused by the direct action of the clamping assembly on the battery 11, and protecting the battery.

For example, the buffer 19 can be a silicone member, a rubber member, a plastic member or a foam member, etc.

The embodiment of the present disclosure also discloses an energy storage system, which has an energy storage device as described in any of the above embodiments. It can be understood that the energy storage system with the energy storage device described above can bring the same or similar beneficial effects as the energy storage device. For details, please refer to the description of the embodiment of the energy storage device, which will not be repeated here.

In practical applications, the energy storage system can be a portable energy storage system, which can be conveniently moved to the target location according to the actual application location.

The technical features of the above embodiments can be combined arbitrarily. In order to make the description concise, all possible combinations of the technical features in the above embodiments are not described. However, as long as there is no contradiction in the combination of these technical features, they should be considered as the scope of this specification.

In addition, the above embodiments only express several implementation methods of the present disclosure, and the description is relatively specific and detailed, but it cannot be understood as a limitation on the scope of the patent of the present disclosure. It should be pointed out that for those skilled in the art, without departing from the concept of the present disclosure, several modifications and improvements can be made, which all belong to the protection scope of the present disclosure. Therefore, the content of this specification should not be understood as a limitation on the present disclosure, and the protection scope of the present disclosure should be based on the attached claims.

## Claims

1. An energy storage device (100), comprising:
a housing assembly (10), comprising a top shell (101), an intermediate shell (102) and a bottom shell (103), wherein the intermediate shell (102) is located between the top shell (101) and the bottom shell (103), the intermediate shell (102) is connected to the top shell (101), and the intermediate shell (102) is connected to the bottom shell (103), an air inlet space (10a) is formed between the intermediate shell (102) and the top shell (101), an air outlet space (10b) is formed between the intermediate shell (102) and the bottom shell (103), the top shell (101) is provided with an air inlet (1011) connected to the air inlet space (10a), the intermediate shell (102) is provided with an air supply port (1021) connected to the air inlet space (10a) and the air outlet space (10b), and the bottom shell (103) is provided with an air outlet (1031) connected to the air outlet space (10b); and
a battery (11), built in the air outlet space (10b);
wherein the air supply port (1021) is installed with a fan assembly (12), the fan assembly (12) is configured to draw outside air into the air inlet space (10a) through the air inlet (1011), and the fan assembly (12) is further configured to blow the outside air in the air inlet space (10a) toward the battery (11), and discharge the outside air to the outside of the air outlet space (10b) through the air outlet (1031).

2. The energy storage device (100) according to claim 1, wherein the top shell (101) is provided with a power plug (1013), and the power plug (1013) is electrically connected to the battery (11) through a wire harness (11a); and
wherein the intermediate shell (102) is further provided with a wire hole (102a) connected to the air inlet space (10a) and the air outlet space (10b), the wire harness (11a) is passed through the wire hole (102a), and a sealing ring is provided between the wire harness (11a) and the wire hole (102a).

3. The energy storage device (100) according to claim 1 or 2, wherein an air inlet area of the air inlet (1011) is S1, an air outlet area of the air outlet (1031) is S2, and S1, S2 satisfy at least one of:
S1<S2, or
S1/S2 ranges from 0.8 to 0.9.

4. The energy storage device (100) according to any one of claims 1 to 3, wherein the air inlet (1011) and the air outlet (1031) are located on a same side of the housing assembly (10), or the air inlet (1011) and the air outlet (1031) are located on two opposite sides of the housing assembly (10), or in a case where there is one air inlet (1011) and at least two air outlets (1031), at least one air outlet (1031) and the air inlet (1011)are located on a same side of the housing assembly (10), and at least another air outlet (1031) is located on an opposite side of the air inlet (1011).

5. The energy storage device (100) according to any one of claims 1 to 3, wherein the air inlet (1011) and the air outlet (1031) are located on the same side of the housing assembly (10), and the air outlet (1031) and the air inlet (1011) satisfy at least one of:
the air outlet (1031) is located at bottom of the bottom shell (103) away from the top shell (101); or
along a height direction from the bottom shell (103) to the top shell (101), a distance between the air outlet (1031) and a bottom surface of the bottom shell (103) is d1, and a distance between the air inlet (1011) and the bottom surface of the bottom shell (103) is d2, d1/d2 ranges from 2/25 to 7/25.

6. The energy storage device (100) according to any one of claims 1 to 5, wherein the energy storage device (100) further comprises a main circuit board (15) provided in the air outlet space (10b), the main circuit board (15) is located on one side of the battery (11) in a width direction of the battery (11), and the main circuit board (15) is electrically connected to the battery (11), the main circuit board (15) has a heat concentration area, and the air outlet (1031) is provided adjacent to the heat concentration area.

7. The energy storage device (100) according to any one of claims 1 to 6, wherein the energy storage device (100) further comprises a main circuit board (15) provided in the air outlet space (10b), the main circuit board (15) is located on one side of the battery (11) in a width direction of the battery (11), and the main circuit board (15) is electrically connected to the battery (11), the main circuit board (15) is provided with electronic components (151), and the electronic components (151) comprise a functional component (1511) with a temperature higher than or equal to 110°C in an operating state; and
the energy storage device (100) further comprises heat dissipation fins (152), the heat dissipation fins (152) are provided on a side of the functional component (1511) away from the battery (11), and the heat dissipation fins (152) extend along an axial direction of the fan assembly (12);
optionally, wherein the air outlet (1031) is provided adjacent to the functional component (1511).

8. The energy storage device (100) according to any one of claims 1 to 7, wherein the energy storage device (100) further comprises a mainboard mounting member (16) and a main circuit board (15) provided in the air outlet space (10b), the mainboard mounting member (16) is connected to the battery (11), and the mainboard mounting member (16) is located on one side of the battery (11) along a width direction of the battery (11), the mainboard mounting member (16) is a shell structure with a cavity, the main circuit board (15) is installed in the cavity of the mainboard mounting member (16), and there is a spacing between the main circuit board (15) and the battery (11), and the main circuit board (15) is electrically connected to the battery (11), and
wherein the mainboard mounting member (16) is provided with a heat dissipation through hole (162) and a vent (161) connected to the cavity, the vent (161) is on a top surface of the mainboard mounting member (16) adjacent to the fan assembly (12),
the heat dissipation through hole (162) satisfies at least one of:
the heat dissipation through hole (162) comprises a top heat dissipation hole (1621) and a bottom heat dissipation hole (1622), the top heat dissipation hole (1621) is provided adjacent to the vent (161), and the bottom heat dissipation hole (1622) is located at bottom of the mainboard mounting member (16) away from the fan assembly (12); and/or
the heat dissipation through hole (162) comprises a first side heat dissipation hole (1623) and a second side heat dissipation hole (1624), the first side heat dissipation hole (1623) and the air outlet (1031) are located on a same side of the housing assembly (10), and the second side heat dissipation hole (1624) is located on an opposite side of the air outlet (1031),
optionally, wherein the top shell (101) is provided with a power plug (1013), the intermediate shell (102) is further provided with a wire hole (102a) connected to the air inlet space (10a) and the air outlet space (10b), the energy storage device (100) further comprises a wire harness (11a), the wire harness (11a) is passed through the wire hole (102a), and one end of the wire harness (11a) is electrically connected to the power plug (1013), and the other end of the wire harness (11a) passes through the bottom heat dissipation hole (1622) and the second side heat dissipation hole (1624) into the cavity of the mainboard mounting member (16) to be electrically connected to the battery (11); and
in a length direction of the energy storage device (100), a length of the mainboard mounting member (16) is L0, a length of the bottom heat dissipation hole (1622) is L1, and a length of the second side heat dissipation hole (1624) is L2, in a height direction of the energy storage device (100), a width of the mainboard mounting member (16) is D0, a width of the bottom heat dissipation hole (1622) is D1, and a width of the second side heat dissipation hole (1624) is D2, wherein L1/L0 ranges from 0.85 to 0.95, L2/L0 ranges from 0.20 to 0.30, D1/D0 ranges from 0.20 to 0.30, D2/D0 ranges from 0.45 to 0.60.

9. The energy storage device (100) according to any one of claims 1 to 8, wherein the energy storage device (100) further comprises a main circuit board (15) and a heat insulation board (17) provided in the air outlet space (10b), the main circuit board (15) is located on one side of the battery in a width direction of the battery, and the main circuit board (15) is electrically connected to the battery (11), and the heat insulation board (17) is provided between the main circuit board (15) and the battery (11),
optionally, wherein the energy storage device (100) further comprises a clamping assembly provided in the air outlet space (10b), the clamping assembly is connected to the intermediate shell (102), and the clamping assembly forms a clamping space (14c), the battery (11) is built in the clamping space (14c), and the heat insulation board (17) is located between the main circuit board (15) and the clamping assembly; and
a material of the clamping assembly is metal, the heat insulation board (17) is provided with a clearance notch (171), the clearance notch (171) is provided with a thermal conductive adhesive (17a), and the thermal conductive adhesive (17a) is bonded between the main circuit board (15) and the clamping assembly.

10. The energy storage device (100) according to any one of claims 1 to 9, wherein the energy storage device (100) further comprises a first clamping member (14a) and a second clamping member (14b) provided in the air outlet space (10b), the first clamping member (14a) and the second clamping member (14b) are respectively connected to the intermediate shell (102), and the first clamping member (14a) and the second clamping member (14b) are connected, a clamping space (14c) is formed between the first clamping member (14a) and the second clamping member (14b), and the battery (11) is built in the clamping space (14c).

11. The energy storage device (100) according to any one of claims 1 to 10, wherein the energy storage device (100) further comprises a main circuit board (15) provided in the air outlet space (10b), the main circuit board (15) is located on one side of the battery (11) in a width direction of the battery (11), and the main circuit board (15) is electrically connected to the battery (11) through a connecting bar (18); wherein,
the connecting bar (18) comprises a first connecting part (181), an elastic deformation part (182), and a second connecting part (183) connected in sequence, the first connecting part (181) is electrically connected to a pole of the battery (11), and the second connecting part (183) is electrically connected to the main circuit board (15).

12. The energy storage device (100) according to any one of claims 1 to 11, wherein an abutment protrusion (1022) is convexly provided on an outer peripheral surface of the intermediate shell (102), and the abutment protrusion (1022) is provided around a peripheral direction of the intermediate shell (102), wherein one end of the intermediate shell (102) is embedded in the bottom shell (103), the abutment protrusion (1022) is located outside the bottom shell (103), and the abutment protrusion (1022) has a first abutment surface (1022a) provided toward a bottom surface of the bottom shell (103), and the first abutment surface (1022a) abuts against an end surface of the bottom shell (103); and
one of the first abutment surface (1022a) and the end surface of the bottom shell (103) is provided with a groove (1022b), and the other of the first abutment surface (1022a) and the end surface of the bottom shell (103) is provided with a protrusion (1032), and the protrusion (1032) is embedded in the groove (1022b);
optionally, wherein the first abutment surface (1022a) is provided with the groove (1022b), and the end surface of the bottom shell (103) is provided with the protrusion (1032), the protrusion (1032) has an inclined outer side surface (1032a), the inclined outer side surface (1032a) is connected to the end surface of the bottom shell (103) at an obtuse angle, and the groove (1022b) has an inclined groove wall surface (1022c) that fits the inclined outer side surface (1032a); or
optionally, wherein the other end of the intermediate shell (102) is embedded in the top shell (101), the abutment protrusion (1022) is located between the top shell (101) and the bottom shell (103), an outer peripheral surface of the abutment protrusion (1022) is lower than an outer peripheral surface of the top shell (101), and an outer peripheral surface of the abutment protrusion (1022) is lower than an outer peripheral surface of the bottom shell (103) in a protruding direction of the abutment protrusion (1022) relative to the outer peripheral surface of the intermediate shell (102), and a connection between the outer peripheral surface of the bottom shell (103) and the end surface of the bottom shell (103) is provided with a chamfer (1033).

13. The energy storage device (100) according to any one of claims 1 to 12, wherein a shape of the intermediate shell (102) is rectangular, one end of the intermediate shell (102) is embedded in the bottom shell (103), and one end of the intermediate shell (102) is convexly provided with a plurality of spaced latch blocks (1023), and the plurality of latch blocks (1023) are arranged along a peripheral direction of the intermediate shell (102) on the outer peripheral surface of the intermediate shell (102), and an inner side wall of the bottom shell (103) is convexly provided with a plurality of protruding blocks (1034), and the plurality of protruding blocks (1034) are arranged along a peripheral direction of the bottom shell (103), and each of the protruding blocks (1034) is provided with a plug-in groove (1034a), and one latch block (1023) is embedded in one plug-in groove (1034a).

14. The energy storage device (100) according to any one of claims 1 to 13, further comprises a buffer (19), and the buffer (19) is wrapped around an outer peripheral surface and a bottom surface of the battery (11).

15. An energy storage system, comprising an energy storage device (100) according to any one of claims 1 to 14.
